# EUROPÄISCHE PATENTANMELDUNG

(11) **EP 3 043 240 A1**
(43) Veröffentlichungstag der Anmeldung: **13.07.2016**
(21) Anmeldenummer: 16150191.1
(22) Anmeldetag: 05.01.2016
(51) Int. Cl.: G06F 3/01

(54) **BEDIENVORRICHTUNG MIT VERBESSERTER HAPTISCHER RÜCKMELDUNG**

(30) Priorität: 05.01.2015 DE 102015200037
(71) Anmelder: Volkswagen AG, 38440 Wolfsburg (DE)
(72) Erfinder: Czelnik, Mark Peter, 38440 Wolfsburg (DE); Klaas, Michael, 38179 Schwülper (DE); Rieger, Carsten, 38268 Lengede (DE)
(74) Vertreter: Patentanwälte Bressel und Partner mbB

(57) **Zusammenfassung**

Die Erfindung betrifft berührungsempfindliche Bedienvorrichtungen mit einem Touchscreen, welche bei einer Betätigung eines virtuellen Bedienelements eine haptische Rückkopplung erzeugen, sowie Verfahren zum Bedienen von Funktionen. Ein solches Verfahren umfasst die Schritte: Darstellen eines virtuellen Bedienelements auf einer Anzeigefläche (21), Erfassen von Berührpositionen auf einer mit der Anzeigefläche (21) gekoppelten Berührfläche (31) einer berührungsempfindlichen Positionserfassungsvorrichtung (30), Erfassen von Andruckkräften bei einer berührenden Betätigung der Berührfläche; Auswerten der erfassten Berührpositionen und Andruckkräfte und ermitteln, ob eine korrekte haptische Betätigung des virtuellen Bedienelements vorliegt, und falls dies der Fall ist, Auslösen einer dem mindestens einen virtuellen Bedienelement zugeordneten Funktion und Erzeugen einer haptischen Rückkopplung an der Berührfläche (31), wobei die ermittelten Andruckkräfte mit einem ersten Kraftschwellenwert (850) und einem zweiten Kraftschwellenwert (860) verglichen werden und beim Überschreiten des ersten Kraftschwellenwertes (850) eine erste haptische Rückkopplung an der Berührfläche (31) erzeugt wird und anschließend bei einem Unterschreiten des zweiten Kraftschwellenwertes (860) eine von der ersten haptischen Rückkopplung abweichende, zweite haptische Rückkopplung an der Berührfläche (31) erzeugt wird, wobei die erste haptische Rückkopplung die zweite haptische Rückkopplung als impulsartige Auslenkungen der Berührfläche (31) ausgeführt werden. Die Bedienvorrichtung (1) weist eine Haptik-Steuerung auf, welche anhand der ermittelten Andruckkräfte zwei unterschiedliche haptische Feedbacks bei einem Betätigungsvorgang eines virtuellen Bedienelements erzeugt.

## Beschreibung

Die Erfindung betrifft berührungsempfindliche Bedienvorrichtungen mit einem Touchscreen, welche bei einer Betätigung eines virtuellen Bedienelements eine haptische Rückkopplung erzeugen.

In modernen Kraftfahrzeugen sind eine Vielzahl von Funktionen und Fahrzeugsystemen zu bedienen. Da ein Bauraum im Fahrzeug begrenzt ist und somit nicht für jedes Fahrzeugsystem und jede Fahrzeugfunktion ein einzelnes der speziellen Funktionen und dem Fahrzeugsystem zugeordnetes Bedienelement ausbildbar und anordenbar sind, ist es heute üblich eine Vielzahl von solchen Fahrzeugsystemen und Bedienfunktionen über eine Multifunktionsanzeige- und Bedienvorrichtung zu bedienen beziehungsweise bedienbar zu machen. Solche Multifunktionsanzeige- und Bedienvorrichtungen, welche typischer Weise in einer Mittelkonsole eines Kraftfahrzeuges angeordnet sind, umfassen in der Regel eine frei programmierbare Anzeigefläche sowie benachbart zu der Anzeigefläche angeordnete physisch ausgebildete Bedienelemente wie Taster, Drehimpulsgeber oder ähnliches. Über eine grafische Darstellung auf der frei programmierbaren Anzeigefläche können den einzelnen physisch ausgebildeten Bedienelementen in unterschiedlichen Anzeige und Bedienkontexten zugeordnete Funktionen grafisch angezeigt werden. Solche grafischen Darstellungen werden als Bedienelementezuordnungen bezeichnet.

Bei Weiterbildungen dieser Anzeige- und Bedienvorrichtungen wird der frei programmierbaren grafischen Anzeigefläche eine berührungsempfindliche Positionserfassungsvorrichtung zugeordnet. Hierbei korrelieren Positionen auf einer Berührfläche der berührungsempfindlichen Positionserfassungsvorrichtung mit Positionen auf der grafischen Anzeigefläche. Ist die Berührungsfläche der berührungsempfindlichen Positionserfassungsvorrichtung transparent ausgebildet und vor der Anzeigefläche angeordnet, so wird die Kombination aus frei programmierbarer Anzeigefläche und berührungsempfindlicher Positionserfassungsvorrichtung als Touchscreen bezeichnet.

Während ein Nutzer bei einer Betätigung eines physisch ausgebildeten Bedienelements, beispielsweise eines Tasters, beim Erreichen eines Anschlags oder einem Zurückschnappen einer Auslösemechanik ein haptisches Feedback erhält, welches insbesondere in Kraftfahrzeugen auch eine Blindbedienung von Tasten ermöglicht, ist ein solches haptisches Feedback, welches auch als haptische Rückkopplung oder Rückmeldung bezeichnet wird, bei gewöhnlichen Touchscreens nicht realisiert.

Aus dem Stand der Technik sind jedoch Weiterbildungen bekannt, bei denen ein Aktor mit der berührungsempfindlichen Positionserfassungsvorrichtung und/oder dem Touchscreen gekoppelt ist. Der Aktor bewirkt eine mechanische Vibration oder Auslenkung, um ein fühlbares, das heißt haptisch wahrnehmbares, Feedback beziehungsweise eine haptisch wahrnehmbare Rückkopplung zu erzeugen.

Bei Bedienvorrichtungen, welche mit einem Touchscreen oder einem abgesetzten Touchpad ausgerüstet sind, besteht eine weitere Schwierigkeit bei der Bedienung, insbesondere in einem Kraftfahrzeug, darin, dass es aufgrund von Erschütterungen auf unebener Fahrbahn oder Ähnlichem dazu kommen kann, dass ein Nutzer mit einem Betätigungselement, beispielsweise seinem Finger, die berührungsempfindliche Positionserfassungseinrichtung unbeabsichtigt oder an einer nicht gewünschten Position im Vorfeld eines Betätigungsvorgangs berührt. Um somit Fehlauslösungen zu vermeiden, ist bei einigen Weiterbildungen vorgesehen, dass zusätzlich zu der Berührposition auch eine Druckkraft ermittelt wird, mit der das Betätigungselement gegen die berührungsempfindliche Positionserfassungsvorrichtung drückt. Bei diesen Ausführungsformen findet eine Funktionsauslösung nur dann statt, wenn an einem vorgegebenen Ort oder in einem vorgegebenen Bereich, welcher einem virtuellen Bedienelement zugeordnet ist, eine Berührposition erfasst wird und zugleich auch eine Andruckkraft einen vorgegebenen Schwellenwert überschreitet. In diesem Fall findet eine Funktionsauslösung, und, sofern ein Aktor mit der berührungsempfindlichen Positionserfassungsvorrichtung direkt oder indirekt gekoppelt ist, auch eine Auslösung einer haptischen Rückkopplung statt.

Die DE 10 2006 012 147 A1 beschreibt eine Eingabevorrichtung, insbesondere für ein Kraftfahrzeug, wobei die Eingabevorrichtung ein Gehäuse, eine in dem Gehäuse angeordnete Anzeigevorrichtung zur optischen Darstellung von Informationen, eine über der Anzeigevorrichtung angeordnete berührungsempfindlichen Positionserfassungsvorrichtung zur Eingabe von Befehlen durch ein Berühren der Berührfläche und einen Aktor zum Bewegen der berührungsempfindlichen Positionserfassungsvorrichtung oder des Gehäuses in zumindest eine Richtung umfasst, wobei das Gehäuse gegenüber der Anzeigevorrichtung bewegbar ist.

Aus der DE 10 2008 035 907 A1 ist ein Eingabegerät mit einem Bedienfeld zur Berührung durch ein über das Bedienfeld bewegbaren Betätigungselement oder einen Finger eines Bedieners mit Mitteln zur Erfassung der Position und/oder der Bewegung des Betätigungselements oder des Fingers auf dem Bedienfeld und einer Auswerteeinheit zum Erzeugen eines der erfassten Größe entsprechenden Steuersignals bekannt. Das Eingabegerät zeichnet sich dadurch aus, dass das Bedienfeld in Berührrichtung aus der Ruhelage aufgrund einer durch das Betätigungselement oder den Finger erzeugten Berührkraft elastisch nachgebend ausgestaltet oder elastisch nachgebend gelagert ist und dabei auf wenigstens einen separaten Drucksensor zur Erzeugung eines der Berührkraft proportionalen Signals einwirkt und das dessen Signal der Auswerteeinheit zur Erzeugung eines weiteren Steuersignals zugeführt wird. Ferner ist ein entsprechendes Verfahren beschrieben. Gezeigt ist eine Ausführungsform, bei der ein Aktor zum Erzeugen einer haptischen Rückkopplung mittels einer Vibration abhängig von der erfassten Berührkraft ein- und ausgeschaltet wird. Wird ein Einschaltschwellenwert der Berührkraft überschritten, wird die Aktorik zum Erzeugen der Vibration eingeschaltet und beim Unterschreiten eines Ausschaltschwellenwerts der Berührkraft wird die Aktorik zum Erzeugen der Vibration ausgeschaltet. Der Einschaltschwellenwert und der Ausschaltschwellenwert unterscheiden sich, um ein unbeabsichtigtes An- und Ausschalten der haptischen Rückkopplung bei einer Andruckkraft im Bereich des Einschaltschwellenwertes zu vermeiden. Es wird somit eine "Ein-Ausschalt-Hysterese" realisiert.

Die im Stand der Technik beschriebene Ausführungsform verbessert zwar eine Blindbedienungsmöglichkeit, jedoch unterscheidet sich die haptische Rückkopplung, die der Nutzer erfährt, deutlich von der, die bei einer Betätigung eines physisch ausgebildeten mechanischen Bedienelements für einen Nutzer auftritt. Für Nutzer, denen die in der DE 10 2008 035 907 A1 beschriebe Art der haptischen Rückkopplung nicht vertraut ist, führt diese somit zu einer Irritation, was beispielsweise bei der Nutzung eines Mietwagens, mit dem der Nutzer nicht zuvor vertraut ist, zu einer Beeinträchtigung der Fahrsicherheit führte.

Der Erfindung liegt somit die technische Aufgabe zugrunde, eine verbesserte Bedienvorrichtung zu schaffen, mit der insbesondere eine Blindbedienung durch einen Nutzer verbessert wird.

Die Erfindung wird durch eine Bedienvorrichtung mit den Merkmalen des Patentanspruchs 1 sowie ein Verfahren zum Erfassen einer Bedieneingabe mit den Merkmalen des Patentanspruchs 6 gelöst. Vorteilhafte Ausführungsformen ergeben sich aus den Unteransprüchen.

Der Erfindung liegt die Idee zugrunde, neben der Berührposition auch die durch ein Betätigungselement senkrecht zur Berührfläche ausgeübte Berührkraft oder Andruckkraft auszuwerten, um dem Nutzer die Bedienung eines virtuellen Bedienelements zu erleichtern, für das eine grafische Repräsentation auf der Anzeigefläche dargestellt wird. Es ist vorgesehen, dass die erfasste Andruckkraft mit einem ersten Kraftschwellenwert verglichen wird und bei einem Erreichen oder Überschreiten des ersten Kraftschwellenwerts durch die erfasste Betätigungskraft oder Andruckkraft ein erstes haptisches Feedback, d. h. eine erste haptische Rückkopplung, über die Berührfläche an den Nutzer zurückübermittelt wird. Diese erste haptische Rückkopplung soll dem Nutzer vermitteln, dass er das virtuelle Bedienelement mit einer ausreichenden Betätigungskraft niederdrückt hat, sodass nun eine Funktionsauslösung erfolgen kann. Ferner wird die Betätigungskraft oder Andruckkraft mit einem zweiten Kraftschwellenwert verglichen, welcher geringer als der erste Kraftschwellenwert ist. Wird, nachdem der erste Kraftschwellenwert durch die ermittelte Andruckkraft überschritten worden ist, durch die ermittelte Andruck- oder Betätigungskraft wieder unterschritten, so wird eine zweite von der ersten haptischen Rückkopplung verschiedene Rückkopplung über die Berührfläche der berührungsempfindlichen Positionserfassungsvorrichtung an den Nutzer ausgegeben. Dieses durch den Nutzer erfahrene Rückkopplungsschema entspricht weitestgehend jenem haptischen Empfinden, welches ein Nutzer bei der Betätigung einer physisch ausgebildeten Taste erfährt. Das erste haptische Feedback korrespondiert beispielsweise mit dem Drücken eines Bedienelements gegen einen Anschlag und das zweite haptische Feedback mit der haptischen Rückkopplung, die beispielsweise durch ein zurückfedern eines elastischen Elements beim Loslassen einer mechanischen Taste auftritt. Der Vorteil besteht darin, dass die erfindungsgemäße Vorrichtung bzw. das erfindungsgemäße Verfahren zum Erfassen einer Nutzereingabe über eine berührungsempfindliche Positionserfassungsvorrichtung, welche mit einer Anzeigevorrichtung gekoppelt ist, eine haptische Rückkopplung vermitteln, welche der eines mechanischen Bedienelements möglichst nahe nachempfunden ist, so dass eine Blindbedienung einfach und zuverlässig durch einen Nutzer, insbesondere ohne Blickzuwendung, möglich ist.

### Definitionen

Als Bedienungsvorrichtung wird eine Vorrichtung zum Erfassen einer Eingabe eines Nutzers verstanden. Auch als Anzeige- und Bedienvorrichtung bezeichnete Vorrichtungen werden hier als Bedienvorrichtung betrachtet.

Als Bedieneinheit wird der Teil einer Bedienvorrichtung bezeichnet, der an oder in dem Gehäuse ausgebildet ist, in dem die für eine Erfassung einer Nutzereingabe verwendete physisch ausgebildete Einrichtung zur Nutzererfassung ausgebildet ist. Bei einer Bedienvorrichtung, bei der eine Nutzereingabe über eine berührende Betätigung einer berührungsempfindlichen Positionserfassungsvorrichtung erfolgt, umfasst die Bedieneinheit sämtliche Komponenten, die in dem Gehäuse oder an dem Gehäuse ausgebildet sind, in oder an welchem eine Berührfläche der berührungsempfindlichen Positionserfassungsvorrichtung angeordnet ist, einschließlich des Gehäuses.

Als frei programmierbare Anzeigevorrichtung wird eine Vorrichtung mit einer Anzeigefläche aufgefasst, bei der an derselben Position der Anzeigefläche zeitlich nacheinander unterschiedlichste Informationen grafisch darstellbar sind. Da dieses gesteuert über eine programmgesteuerte Einrichtung erfolgt, wird von einer frei programmierbaren Anzeigevorrichtung gesprochen. Eine Anzeigefläche einer solchen frei programmierbaren Anzeigevorrichtung wird als frei programmierbare Anzeigefläche bezeichnet.

Eine berührungsempfindliche Positionserfassungsvorrichtung ist eine Vorrichtung, welche eine Berührfläche aufweist, welche in der Regel eben und glatt ausgebildet ist, und welche ausbildet ist, einen Ort einer Berührung durch ein Betätigungselement zu bestimmen. Ein solcher bestimmter Ort wird als Berührposition bezeichnet. Berührungsempfindliche Positionserfassungsvorrichtungen, welche in der Lage sind zeitgleich mehrere Berührpositionen zu erfassen, werden als mehrfach berührungsempfindliche Positionserfassungseinrichtungen oder auch als Multi-Touch-fähige Vorrichtungen bezeichnet. Diese stellen eine Untergruppe der berührungsempfindlichen Positionserfassungsvorrichtungen dar.

Ist die Berührfläche transparent ausgebildet und mit einer dahinter angeordneten frei programmierbaren Anzeigefläche gekoppelt, so wird die Gesamtvorrichtung als Touchscreen bezeichnet. Auch hierbei gibt es erneut die Einteilung in einfach-berührungsempfindliche Touchscreens und mehrfach- berührungsempfindliche Touchscreens, welche zeitgleich mehrere Berührungspositionen von Betätigungselementen erfassen können.

Als Betätigungselement wird ein Gegenstand bezeichnet, welcher zum Betätigen der berührungsempfindlichen Positionserfassungsvorrichtung geeignet ist. In der Regel handelt es sich hierbei um ein Körperteil, beispielsweise einen ausgestreckten Finger, besonders bevorzugt einen Zeigefinger. Alternativ kann jedoch auch ein Stift oder anderer Gegenstand als Betätigungselement dienen.

Als virtuelles Bedienelement wird die Ausgestaltung eines Bedienelements über eine frei programmierbare Anzeigefläche in Verbindung mit einem berührungsempfindlichen Positionserfassungsvorrichtung bezeichnet. Hierbei ist dem virtuellen Bedienelement in der Regel eine grafische Darstellung auf der Anzeigefläche zugeordnet. Zusätzlich existiert ein relativ zur berührungsempfindlichen Positionserfassungsvorrichtung definierter Auslösebereich innerhalb dessen Berührpositionen als Anwahl des entsprechenden virtuellen Bedienelements aufgefasst werden.

Als Druckkraftmessvorrichtung wird jede Messeinrichtung bezeichnet, die in der Lage ist eine bei der Betätigung der Berührfläche einer Positionserfassungsvorrichtung senkrecht zur Berührfläche wirkende Betätigungskraft zu messen. Hierbei kommen alle Sensortypen und Sensoren, oder Sensorelemente in Frage, die eine solche Messung ermöglichen.

Als Dehnungsmessstreifen werden streifenförmige Sensorelemente bezeichnet, die eine physikalisch messbare Eigenschaft aufgrund einer Dehnung des Streifens ändern. Insbesondere sind Dehnungsmessstreifen als resistive Sensorelemente ausgebildet, die bei einer Dehnung ihren Widerstand ändern.

Als Steuerung einer Vorrichtung wird eine Gesamtheit aller Komponenten bezeichnet, welche für eine Auswertung von erfassten Signalen oder Nutzereingaben und/oder für eine Steuerung von Bestandteilen der Vorrichtung und/oder anderen Vorrichtungen vorgesehen sind. Die Komponenten der Steuerung können in Hardware und/oder Software oder Kombinationen von Hardware und Software umgesetzt sein. Komponenten der Steuerung, welche in der Bedieneinheit der Bedienvorrichtung ausgebildet sind, werden als lokale Steuereinrichtungen bezeichnet.

Die Begriffe haptisches Feedback, haptische Rückkopplung und haptische Rückmeldung werden als synonyme Begriffe verwendet. Sie beschreiben einen durch den Tastsinn es Menschen wahrnehmbaren Effekt zum Zwecke der Rückmeldung an einen Nutzer einer Vorrichtung.

Sofern hier vom Erfassen oder Ermitteln der Andruckkraft gesprochen wird, ist ein getrennt von der berührungsempfindlichen Positionserfassung ausgebildetes Erfassen oder Ermitteln gemeint. Dieses erfolgt mit mindestens einer zusätzlich zu der berührungsempfindlichen Positionserfassungsvorrichtung ausgebildeten Druckkraftmessvorrichtung.

### Bevorzugte Ausführungsformen

Eine bevorzugte Bedienvorrichtung, insbesondere für ein Kraftfahrzeug, umfasst ein Gehäuse, einen Touchscreen, welcher eine Anzeigevorrichtung mit einer frei programmierbaren Anzeigefläche zum Darstellen mindestens eines virtuellen Bedienelements und eine berührungsempfindliche Positionserfassungsvorrichtung mit einer vor der Anzeigefläche angeordneten Berührfläche aufweist, wobei zumindest die Berührfläche beweglich gegenüber dem Gehäuse an diesem gelagert ist; mindestens eine Druckkraftmessvorrichtung zum Ermitteln einer auf die Berührfläche einwirkenden Andruckkraft bei einer berührenden Betätigung des Touchscreens; mindestens eine direkt oder indirekt mit der Berührfläche gekoppelte Aktoreinrichtung zum gezielten Bewegen zumindest der Berührfläche gegenüber dem Gehäuse; sowie eine Steuerung, welche ausgebildet ist, abhängig von den erfassten Berührpositionen und erfassten Andurckkräften zu ermitteln, ob eine korrekte haptische Betätigung des mindestens einen virtuellen Bedienelements vorliegt, und, sofern dieses der Fall ist, eine dem mindestens einen virtuellen Bedienelement zugeordnete Funktion auszulösen und die mindestens eine Aktoreinrichtung anzusteuern, um eine haptische Rückkopplung an der Berührfläche zu erzeugen, wobei die Steuerung ausgebildet ist, die Andruckkräfte mit einem ersten Kraftschwellwert und einem hiervon abweichenden zweiten Kraftschwellenwert zu vergleichen, und beim Überschreiten des ersten Kraftschwellenwerts ein erstes Aktor-Aktivierungssignal zu erzeugen, und bei einem anschließenden Unterschreiten des zweiten Kraftschwellenwerts ein zweites von den ersten Aktor-Aktivierungssignal verschiedenes zweites Aktor-Aktivierungssignal zu erzeugen, wobei das erste und das zweite Aktor-Aktivierungssignal ausgestaltet sind, über die Aktoreinrichtung jeweils eine Einkopplung eines kurzen mechanischen Impulses an der Berührfläche zu veranlassen und wobei die durch das erste Aktor-Aktivierungssignal und das zweite Aktor-Aktivierungssignal erzeugten haptisch wahrnehmbaren Rückkopplungen, an der Berührfläche unterschiedlich sind. Dies bedeutet, dass unterschiedliche haptische Wahrnehmungen bei einem Nutzer hervorgerufen werden. Wichtig ist hierbei, dass die durch die beiden Aktor-Aktivierungssignale bewirkten haptischen Rückkopplungen eigenständige impulsartige haptische Rückkopplungen auslösen.

Ebenso wird ein Verfahren zum Bedienen von Funktionen geschaffen, welches die Schritte umfasst Darstellen eines virtuellen Bedienelements auf einer Anzeigefläche, Erfassen von Berührpositionen auf einer mit der Anzeigefläche gekoppelten Berührfläche einer berührungsempfindlichen Positionserfassungsvorrichtung, Erfassen von Andruckkräften bei einer berührenden Betätigung der Berührfläche; Auswerten der erfassten Berührpositionen und Andruckkräfte und ermitteln, ob eine korrekte haptische Betätigung des virtuellen Bedienelements vorliegt, und falls dies der Fall ist, Auslösen einer dem mindestens einen virtuellen Bedienelement zugeordneten Funktion und Erzeugen einer haptischen Rückkopplung an der Berührfläche, wobei die ermittelten Andruckkräfte mit einem ersten Kraftschwellenwert und einem zweiten Kraftschwellenwert verglichen werden und beim Überschreiten des ersten Kraftschwellenwertes eine erste haptische Rückkopplung an der Berührfläche erzeugt wird und anschließend bei einem Unterschreiten des zweiten Kraftschwellenwertes eine von der ersten haptischen Rückkopplung abweichende, zweite haptische Rückkopplung an der Berührfläche erzeugt wird, wobei die erste haptische Rückkopplung und die zweite haptische Rückkopplung als impulsartige Auslenkungen der Berührfläche ausgeführt werden. Es versteht sich, dass die zweite haptische Rückkopplung nur erzeugt wird, wenn zuvor die erste haptische Rückkopplung erzeugt wird.

Vorzugsweise wird das haptische Feedback nur erzeugt, sofern die mindestens eine Funktion selektiert ist. Dieses bedeutet, dass das haptische Feedback nur erzeugt wird, wenn die erfasste Berührposition in dem Auslösebereich eines virtuellen Bedienelements liegt. Eine Auswertung der erfassten Andruckkräfte gegenüber den Kraftschwellenwerten kann unterbleiben, wenn keine Funktion als auszulösende Funktion selektiert ist. Ist eine Funktion als auszulösende Funktion selektiert, wird bei dem Überschreiten der ersten Kraftschwelle die erste haptische Rückkopplung ausgelöst und beim anschließenden Unterschreiten der zweiten Kraftschwelle das zweite haptische Feedback ausgelöst. Die Steuerung ist daher ausgebildet, die mindestens eine Funktion als auszulösende Funktion zu selektieren, wenn die erfasste Berührposition in einem Auslösebereich des mindestens einen virtuellen Bedienelements liegt, der dem mindestens einen virtuellen Bedienelement zugeordnet ist. Für das weitergebildete Verfahren ist vorgesehen, dass beim Auswerten die dem mindestens einen virtuellen Bedienelement zugeordnete Funktion als auszulösende Funktion ausgewählt wird, wenn die erfasste Berührposition in einem dem virtuellen Bedienelement zugeordneten Auslösebereich befindet.

Als besonders vorteilhaft hat es sich erwiesen, neben der haptischen Rückkopplung auch eine akustische Rückkopplung vorzusehen. Hierfür weist eine besonders bevorzugte Ausführungsform der Erfindung einen an oder in dem Gehäuse angeordneten Lautsprecher auf und weist die Steuerung eine Klangerzeugungseinrichtung auf, welche zeitlich synchronisiert zumindest mit einem der Aktor-Aktivierungssignale einen akustischen Klang über den Lautsprecher ausgibt. Vorzugsweise wird sowohl mit dem der ersten haptischen Rückkopplung als auch mit der zweiten haptischen Rückkopplung jeweils ein akustischer Klang über den Lautsprecher ausgegeben. Bei einer Ausführungsform ist somit vorgesehen, dass sowohl mit der ersten haptischen Rückkopplung als auch mit der zweiten haptischen Rückkopplung jeweils ein Klangsignal zeitlich synchronisiert ausgegeben werden. Die beiden ausgegebenen Klänge sind vorzugsweise für die beiden haptischen Rückkopplungen unterschiedlich ausgestaltet

Da ein menschlicher Nutzer in der Lage ist, Klangquellen räumlich zu orten, ist es notwendig für eine optimale Nachbildung einer mechanischen Taste durch eine berührungsempfindliche Positionserfassungsvorrichtung, die mit einer Anzeigefläche gekoppelt ist, den Klang räumlich nahe der Berührfläche, an der die mechanische Betätigung vorgenommen wird, auszusenden. Daher ist der Lautsprecher vorzugsweise in oder an dem Gehäuse angeordnet, an dem die Berührfläche der berührungsempfindlichen Positionserfassungsvorrichtung gelagert ist.

Um eine zeitliche Synchronität hinsichtlich des Erfassens der haptischen Rückkopplung an der Berührfläche und dem Erfassen des akustischen Klangs zu gewährleisten, weist die Bedienvorrichtung vorzugsweise eine Verzögerungseinrichtung auf, die ein elektronisches Klang-Aktivierungssignal zeitlich gegenüber dem Aktor-Aktivierungssignal so verzögert, dass die für die mechanische Auslenkung der Berührfläche benötigte Zeit durch die relative Verzögerung des elektronischen Klang-Aktivierungssignals gegenüber den Aktor-Aktivierungssignalen ausgeglichen wird, so dass eine maximale Auslenkung der impulsartigen mechanischen Auslenkung zeitgleich mit einem Beginn eines akustischen Klangs, vorzugsweise einen Klangimpuls, ausgegeben wird. Das Klang- Aktivierungssignal bewirkt über den Klanggenerator die Ausgabe des akustischen Klangs oder Klangsignals.

Die zeitliche Synchronisation verbessert die Klangzuordnung zu der haptischen Rückkopplung.

Bei einer Ausführungsform ist die Aktoreinrichtung ausgebildet, die Berührfläche senkrecht zu deren flächiger Ausdehnung impulsartig auszulenken. Ein Vorteil einer solchen Ausgestaltung liegt darin, dass die haptische Rückkopplung entgegen der Betätigungsrichtung wirken kann. Hierdurch kann beispielsweise die Rückkopplung ähnlich wie eine Rückstellkraft eines mechanischen Bedienelements wirken.

Besonders bevorzugt wird die Berührfläche biegesteif ausgebildet. Dies bedeutet, dass eine möglichst geringe Durchbiegung oder lokale Verformung bei einer Betätigung auftritt. Solche Ausführungsformen führen insbesondere bei Aktoren, welche eine Bewegung senkrecht zur flächigen Erstreckung der Berührfläche bewirken dazu, dass die Aktoren größere Kräfte auf die Berührfläche ausüben können müssen als bei Ausführungsformen, bei denen Aktoren die Berührfläche in der Ebene der flächigen Erstreckung und somit senkrecht zur Betätigungsrichtung auslenken.

Bei diesen Ausführungsformen mit Rückkopplungsauslenkung in der Ebene der Berührfläche ist eine "feste" Lagerung in Bedienrichtung einfacher möglich. Eine Aktor-Auslösung hat darüber hinaus kaum einen Einfluss auf die Druckkraftmessung, da bei der Druckkraftmessung nur die Kraft senkrecht zur Bewegungsrichtung der Rückkopplung, nämlich senkrecht zur Berührfläche gemessen wird. Nachteilig an solchen Ausführungsformen kann jedoch sein, dass eine laterale Bewegung, sofern die Berührfläche starr mit der dahinter angeordneten Anzeigefläche gekoppelt ist, und diese somit bei der haptischen Rückkopplung mit ausgelenkt wird, zu einer Störung der optischen Wahrnehmung der auf der Anzeigefläche angezeigten Informationen führt. Diese Informationen werden dann als bewegt oder unscharf wahrgenommen, was nachteilig ist. Daher ist die Auslenkungsamplitude so zu wählen, dass diese Effekte möglichst minimal bleiben.

Die Berührfläche ist, gegebenenfalls mit der Anzeigefläche der Anzeigevorrichtung, vorzugsweise über Blattfedern an dem Gehäuse gelagert. Um ein Eindringen von Staub und Schmutz in die Vorrichtung zu verhindern, überlappt ein Rahmen des Gehäuses vorzugsweise einen Randbereich der Berührfläche beziehungsweise der mit der Berührfläche gekoppelten Anzeigevorrichtung.

Als besonders geeignete Kraftmesssensoren haben sich Dehnungsmessstreifen erwiesen, die ihren Widerstand abhängig von ihrer Dehnung verändern. Mit einer elektronischen Messschaltung wird der Widerstand eines Messstreifens ermittelt und ein die Andruckkraft repräsentierendes elektronisches Signal erzeugt. Dieses ist bei einer bevorzugten Ausführungsform so ausgestaltet, dass eine Signalstärke proportional zur ermittelten Andruckkraft ist. Bei bevorzugten Ausführungsformen, welche Dehnungsmessstreifen verwenden, werden mehrere Dehnungsmessstreifen an den mehreren Lagerungsstellen der Berührfläche mit dem Gehäuse angeordnet und gemeinsam oder einzeln ausgewertet.

Bei anderen Ausführungsformen ist mit der Berührfläche beispielsweise ein Stößel gekoppelt, der bei einer berührenden Betätigung eine Auslenkung in Betätigungsrichtung erfährt. Über den Stößel wird eine Kondensatorelektrode ausgelenkt, so dass sich eine Kapazität eines Kondensators abhängig von der durch den Stößel übertragenen Andruckkraft ändert. Über eine elektronische Schaltung wird erneut ein Kraftsignal erzeugt. Auch hier sind Ausführungsformen denkbar, die mehrere solcher Kraftmesssensoren auswerten.

Wieder andere Ausführungsformen messen die Andruckkraft induktiv. Bei einem induktiven Kraftmesssensor ist beispielsweise eine Topfmagnet mit der Berührfläche starr gekoppelt, welcher in eine Spule hineinragt. Bei einer Auslenkung der Berührfläche wird der Topfmagnet entlang der Spulenachse bewegt und bewirkt so eine Induktion in der Spule. Über den induzierten Strom ist es möglich, die die Bewegung des Topfmagnetens auslösende Kraft zu ermitteln. Vorteil einer solchen Ausführungsform ist es, dass die selbe Anordnung, welche zur Kraftmessung verwendet wird, auch als Aktor verwendet werden kann, indem die Spule gezielt bestromt wird. Bevorzugte Ausführungsformen weisen mehrerer solcher induktiven Aktor-Sensoreinrichtungen auf, welche beispielsweise in den vier Ecken einer rechteckig ausgebildeten Berührfläche, an der Rückseite der Berührfläche, beziehungsweise einer Rückseite der dahinter angeordneten Anzeigevorrichtung angeordnet sind.

Andere Ausführungsformen können Piezo-Sensoren zur Ermittlung der Kraft vorsehen.

Auch Aktoreinrichtungen mit Aktoren, welche eine Auslenkung parallel zur Berührungsfläche bewirken, sind vorzugsweise als elektromechanische Aktoren ausgebildet. Die Aktor-Aktivierungssignale oder hieraus abgeleitete Ansteuerungssignale für den oder die Aktoren sowie die Aktoren und die Lagerung der Berührfläche werden vorzugsweise so ausgestaltet, dass die Rückkopplungsimpulse, welche für die verschiedenen haptischen Rückkopplungen verwendet werden, möglichst nur eine einzige Auslenkung und Rückkehr in die Ruhelage mit gegebenenfalls einem sehr stark gedämpften Überschwinger auslösen. Unterschiedliche haptische Rückkopplungen können somit über eine Stärke der Auslenkung aber auch über eine Dauer der Auslenkung unterschiedlich ausgestaltetet werden.

In der Regel werden über eine solche Bedienvorrichtung eine Vielzahl von Funktionen zeitgleich zur Bedienung angeboten, so dass die Anzeigevorrichtung ausgebildet ist, mehrere virtuelle Bedienelemente zeitgleich darzustellen. Jedem virtuellen Bedienelement ist dann ein Auslösebereich zugeordnet. Anhand der erfassten Berührposition kann ermittelt werden, welches virtuelle Bedienelement der Nutzer mit dem Betätigungselement betätigen will und die dem entsprechenden virtuellen Bedienelement zugeordnete Funktion selektiert werden. Die Auslösung der entsprechenden Funktion erfolgt dann jeweils nur, wenn die erste Kraftschwelle bei der Betätigung überschritten wird.

Bei einigen Ausführungsformen wird die Funktionsauslösung bereits beim Überschreiten der ersten Kraftschwelle vorgenommen.

Bevorzugt werden jedoch Ausführungsformen, bei denen die Funktionsauslösung erst beim Unterschreiten der zweiten Kraftschwelle ausgelöst wird.

Sind über die Bedienvorrichtung eine Vielzahl von verschiedenen Funktionen bedienbar und auslösbar, so ist eine aufwendige Logik notwendig, um die der zugrundeliegenden Bedienlogik einer Mensch-Maschine-Schnittstelle (HMI-human machine interface) umzusetzen. Diese wird bei modernen Kraftfahrzeugen häufig in einem Zentralrechner programmgesteuert im Zusammenwirken mit einer zentralen Prozessoreinrichtung umgesetzt. Die Anzeigevorrichtung und die berührungsempfindliche Positionserfassungsvorrichtung weisen jeweils eine eigene Steuereinrichtung auf, welche räumlich benachbart zu der Berührfläche beziehungsweise der Anzeigefläche angeordnet sind. Die Steuerung der Bedienvorrichtung kann somit zwischen diesen lokalen Steuereinrichtungen und einem über ein BUS-System hiermit gekoppelten Zentralrechner aufgeteilt sein.

Um eine zeitnahe haptische Rückkopplung zu der Betätigung zu erlangen, wird das Auslösen der haptischen Rückkopplung über eine in die Bedieneinheit integrierte Haptik-Steuereinrichtung bewirkt. Diese wertet in einer einfachen Ausführungsform lediglich die erfassten Andruckkräfte aus. Sobald der erste Kraftschwellenwert erreicht oder überschritten ist, wird das erste haptische Feedback und gegebenenfalls das erste akustische Feedback in Form eines zeitlich synchronisiert ausgegebenen Klangsignals ausgegeben. Beim nachfolgenden Unterschreiten des zweiten Kraftschwellenwertes, werden das zweite haptische und gegebenenfalls zweite akustische Feedback ausgegeben.

Um jedoch zu verhindern, dass das haptische Feedback erzeugt wird, wenn der Nutzer mit dem Betätigungselement an einem Ort gegen die Berührfläche drückt, der nicht in dem Auslösebereich eines virtuellen Bedienelements liegt, ist eine lokale Haptiksteuerung vorzugsweise so ausgebildet, dass dieser die Positionen oder Bereiche der Berührfläche übermittelt werden, an denen sich ein Auslösebereich eines der auf der Anzeigefläche dargestellten virtuellen Bedienelemente befindet. Eine Überwachung der Kraftschwellen findet in einer lokalen Haptik-Steuereinrichtung ebenso wie ein Prüfen der aktuell ermittelten Berührpositionen gegenüber den Berührpositionen der Aktivierungsbereiche statt. Liegt die Berührposition in irgendeinem der Aktivierungsbereiche und wird zugleich die erste Kraftschwelle überschritten, so wird das erste Aktor-Aktivierungssignal und gegebenenfalls zusätzlich das erste Klang-Aktivierungssignal erzeugt. Nachfolgend wird nach dem anschließenden Unterschreiten der zweiten Kraftschwelle das zweite Aktor-Aktivierungssignal und gegebenenfalls ein zweites Klang-Aktivierungssignal erzeugt. Vorteil dieser Ausführungsform ist es, dass jeweils zeitnah und unbeeinflusst von Übermittlungszeiten an den Zentralrechner und dessen Verarbeitungsgeschwindigkeit ein haptisches Feedback bei einer Bedienelementbetätigung erzeugt wird. Zusätzlich werden die Berührpositionen und Kraftwerte über ein Bus-System an den Zentralrechner übermittelt, der dann die eigentliche Funktionsauslösung und gegebenenfalls grafische Umgestaltung der auf der Anzeigefläche dargestellten Informationen veranlasst.

Bei anderen Ausführungsformen kann die Erzeugung der Aktor-Aktivierungssignale und/oder der Klang-Aktivierungssignale auch ausschließlich über eine in dem Zentralrechner umgesetzte Bedienlogik erzeugt und ausgelöst werden. Dieses ermöglicht eine umfassende logische Steuerung.

Zusätzlich kann eine Ausführungsform vorsehen, dass zusätzlich die zeitlich im Zusammenhang erfassten Berührpositionen zu Berührspuren zusammengefasst werden und diese Berührspuren oder Abschnitte hiervon gegenüber vorgegebenen Berührgesten klassifiziert werden. Wird eine Berührspur als eine Berührgeste klassifiziert, so kann eine mit der Berührgeste verknüpfte Funktion ausgelöst werden. Insbesondere können so Funktionen wie ein Vergrößern und/oder Verkleinern der grafischen Darstellung (Zoomen), ein Blättern in Listen etc. realisiert werden. Die einzelnen Listeneinträge können hingegen virtuelle Bedienelemente sein, deren Betätigung das oben beschriebene haptische Feedback auslöst.

Alternativ oder zusätzlich kann bei einigen Ausführungsformen vorgesehen sein, dass ein weiteres haptisches Feedback beim Betreten und/oder Verlassen eines virtuellen Bedienelements, insbesondere bei einer streifenden Berührung der Berührfläche ausgegeben wird. So ist ein Auffinden der betätigbaren Bedienelemente ohne Blickzuwendung einfacher möglich. Hierbei können sich die haptischen Rückkopplungen für das Betreten und Verlassen eines virtuellen Bedienelements unterscheiden. Ein Nutzer kann so beide Vorgänge haptisch unterscheiden. Die Rückkopplungen unterscheiden sich ferner vorzugsweise von denen, die bei der Betätigung des virtuellen Bedienelements erzeugt werden. Als Betreten eines virtuellen Bedienelements wird das erstmalige erfassen einer Berührposition in einem Auslösebereich des Bedienelements verstanden, nachdem zuvor erfasste Berührpositionen, sofern solche in einem vorausgehenden vorfestgelegten Zeitintervall überhaupt erfasst wurden, nicht in diesem Auslösebereich lagen. Umgekehrt ist das Verlassen festgestellt, wenn die Berührposition nicht mehr in dem Auslösebereich des virtuellen Bedienelements erfasst wird, indem zuvor Berührpositionen des Betätigungselements erfasst wurden. Bei einigen Ausführungsformen werden auch ein erstmaliges Berühren der Berührfläche in einem Auslösebereich als Betreten und ein Beenden der Berührung, die zuvor in einem Auslösebereich erfolgte, als Verlassen aufgefasst. Andere Ausführungsformen nehmen diese beiden Fälle aus.

Insbesondere kann eine einem virtuellen Bedienelement zugeordnete Funktion eine Funktion in einem Kraftfahrzeug sein. Auf diese Weise lassen sich ein Teil der Funktionen oder sämtliche Funktionen in einem Kraftfahrzeug auf interaktive Weise steuern. In einer Ausführungsform ist deshalb insbesondere vorgesehen, dass die zugeordnete Funktion eine Funktion in einem Kraftfahrzeug ist. Gerade bei einer Vielzahl von Funktionen, die heutzutage in modernen Kraftfahrzeugen angeboten und kontrolliert werden müssen, bietet sich trotz eines begrenzten Platzangebotes in einer Fahrgastzelle des Kraftfahrzeugs somit die Möglichkeit, sämtliche Funktionen in ordentlicher und übersichtlicher Weise darzustellen und ansteuerbar zu machen und dennoch nicht auf eine ansprechende Haptik verzichten zu müssen.

In einer weiteren Ausführungsform ist deshalb ferner vorgesehen, dass die Bedienvorrichtung zur Verwendung in einem Kraftfahrzeug ausgebildet ist. Die Bedienvorrichtung kann beispielsweise in einer Mittelkonsole des Kraftfahrzeugs oder aber auch im hinteren Bereich des Kraftfahrzeuges angeordnet sein.

Die Bedienvorrichtung eignet sich für sämtliche Anwendungsmöglichkeiten, bei denen eine Mensch-Maschine-Interaktion notwendig oder gewünscht ist. In einer anderen Ausführungsform ist deshalb vorgesehen, dass die Bedienvorrichtung Bestandteil eines Landfahrzeugs, eines Luftfahrzeugs, eines Wasserfahrzeugs, eines Verkaufs- oder Informationsautomaten, eines Telefons, eines Tabletcomputers, eines Personalcomputers, eines interaktiven Möbelstücks, eines Fernsehers, eines Haushaltsgeräts, einer Produktions- oder Prozessanlage, eines Leitstands, eines Haushaltsgeräts oder eines Geräts der Unterhaltungselektronik oder eines Spielautomaten ist. Die Bedienvorrichtung erlaubt es in vorteilhafter Weise, eine Vielzahl von Funktionen der Vorrichtung in übersichtlicher und geordneter Weise auch bei begrenztem Raum für eine Anordnung von Bedienelementen für eine Erfassung haptische Nutzereingaben darzustellen und ansteuerbar zu machen. Das Gehäuse der Bedienvorrichtung kann dabei Bestandteil eines äußeren Vorrichtungsgehäuses oder das Vorrichtungsgehäuse einer entsprechenden Vorrichtung sein. Das Gehäuse kann aber auch lediglich mit dem äußeren Vorrichtungsgehäuse der entsprechenden Vorrichtung verbunden sein, beispielsweise in dieses eingefügt sein.

Nachfolgend wird die Erfindung unter Bezugnahme auf eine Zeichnung näher erläutert. Hierbei zeigen:
- Fig. 1: eine schematische Darstellung einer Bedienvorrichtung und deren Anordnung in einem Kraftfahrzeug;
- Fig. 2: eine schematische Darstellung einer Haptiksteuerung;
- Fig. 3: eine schematische Explosionsansicht einzelner Bestandteile einer Bedieneinheit;
- Fig. 4: eine schematische Ansicht eines Touchscreens mit Teilen der Haltevorrichtung;
- Fig. 5: eine schematische Ansicht einer Ausführungsform einer Vorrichtung, bei der eine Aktorik in der Betätigungsrichtung wirkt, wobei ein Touchscreen aus Veranschaulichungsgründen nicht enthalten ist;
- Fig. 6: eine schematische Darstellung einer Ansteuerelektronik und einer Halterungsplatte;
- Fig. 7: eine perspektivische Rückansicht einer zusammengebauten Bedieneinheit;
- Fig. 8: eine schematische Darstellung zur Erläuterung der Kraftmessung mit Dehnungsmessstreifen;
- Fig. 9: eine weitere perspektivische Ansicht zur Erläuterung der Kraftmessung über Dehnungsmessstreifen;
- Fig. 10: eine schematische Darstellung zur Erläuterung der Kraftmessung über ein induktives Messverfahren;
- Fig. 11: eine schematische Darstellung zur Erläuterung einer Druckkraftmessung über einen Plattenkondensator;
- Fig. 12: eine schematische Darstellung der benötigten Andruckkraft, welche zum Bewirken einer Auslenkung notwendig ist;
- Fig. 13: eine schematische Darstellung zur Erläuterung der bei einer Bedienung auftretenden Betätigungskräfte aufgetragen gegen die Zeit sowie eine Zuordnung der Auslenkung zu den auftretenden Kräften;
- Fig. 14: eine schematische Darstellung zur Erläuterung des Aktoransteuerungssignals und der sich daraus ergebenden Auslenkung der Berührfläche sowie die zeitliche Synchronisation eines Klangsignals;
- Fig. 15a, 15b: unterschiedliche sich ergebende Auslenkungskurven der Berührfläche für unterschiedliche Dämpfungen;
- Fig. 16: eine schematische Darstellung zur Erläuterung der Aufteilung der Steuerung auf unterschiedliche Steuerungseinrichtungen,
- Fig. 17: eine schematische Darstellung lokaler Steuerungseinrichtungen für das Betreiben einer Bedieneinheit;
- Fig. 18: eine schematische Darstellung zur Erläuterung der Realisierung einer Bedienvorrichtung, welche eine aufwendige Mensch-Maschine-Schnittstellen-Logik aufweist;
- Fig. 19: eine Gegenüberstellung der auftretenden Latenzzeiten für eine Ausführungsform, bei der die Steuerung lokal in einzelnen Steuereinrichtungen ohne Verwendung eines Zentralrechners realisiert ist, und einer Steuerung, welche zusätzlich einen Zentralrechner verwendet;
- Fig. 20: eine schematische Darstellung einer Schnittstelle zwischen einem Zentralrechner und den mit der Bedieneinheit lokal verknüpften Steuerungseinrichtungen;
- Fig. 21: eine schematische Darstellung der ausgetauschten Nachrichtendiagramme bei einer Ausführungsform bei der ein Teil der Steuerung mit einem Zentralrechner ausgeführt wird;
- Fig. 22: eine schematische Darstellung der Nachrichten, einer Ausführungsform, bei der die Steuerung der haptischen Rückkopplung in lokalen Steuereinrichtungen der Bedieneinheit realisiert ist; und
- Fig. 23: eine schematische Darstellung einer Vorrichtung mit einer Bedienvorrichtung.

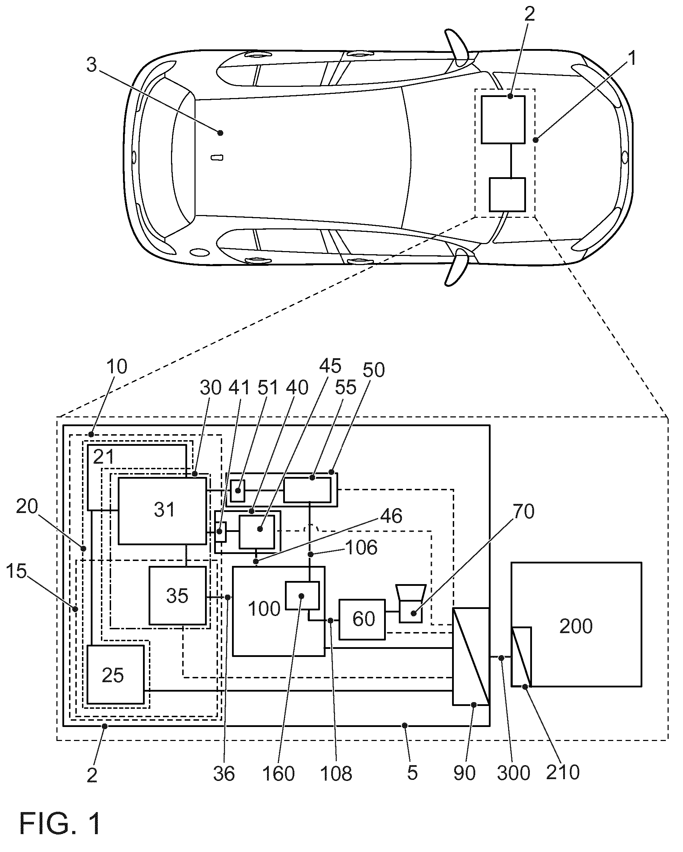

In Fig. 1 schematisch ein Kraftfahrzeug 3 mit einer Bedienvorrichtung 1 schematisch dargestellt. Die Bedienvorrichtung 1 umfasst eine Bedieneinheit 2 mit einem Gehäuse 5, welches in der Regel im Bereich des Armaturenbretts aber besonders bevorzugt in einer Mittelkonsole angeordnet ist. In dem Gehäuse ist ein Touchscreen 10 angeordnet, die eine frei programmierbare Anzeigevorrichtung 20 und eine damit verknüpfte berührungsempfindliche Positionserfassungsvorrichtung 30 umfasst. Bei den meisten Ausführungsformen ist eine Anzeigefläche 21 der frei programmierbaren Anzeigevorrichtung 20 fest mit einer Berührfläche 31 der berührungsempfindlichen Positionserfassungsvorrichtung 30 verbunden. In jedem Fall ist zumindest die Berührfläche 31 der berührungsempfindlichen Positionserfassungsvorrichtung 30 beweglich gegenüber dem Gehäuse 5, vorzugsweise elastisch, gelagert.

Eine Anzeigesteuereinrichtung 25 steuert die Darstellung von Informationen auf der Anzeigefläche 21. Eine Positionserfassungssteuereinrichtung 35 ist so ausgebildet, dass diese Koordinaten für erfasste Berührpositionen einer berührenden Betätigung der Berührfläche 31 durch ein Betätigungselement (nicht dargestellt) ermittelt. Die Berührfläche 31 ist transparent und kann in die Anzeigefläche 21 integriert sein. Durch die Berührfläche 31 hindurch sind somit die auf der Anzeigefläche 21 dargestellten Informationen, beispielsweise grafische Schriftzeichen, Piktogramme, grafische Darstellungen von Bedienelementen und Ähnliches, sichtbar.

Mit der Berührfläche 31 oder, falls die Berührfläche mit der frei programmierbaren Anzeigevorrichtung 10 fest verbunden ist, mit dem Touchscreen 10 ist eine Druckkraftmessvorrichtung 40 gekoppelt, welcher in der Lage ist, bei einer berührenden Betätigung eine senkrecht zur Berührfläche 31 auf diese einwirkende Betätigungskraft zu messen. Beispielsweise können mit der Berührfläche 31 ein oder mehrere Sensorelemente 41 verbunden sein, welche bei einer Auslenkung der Berührfläche 31 ein Signal erzeugen, welches von einer Druckmesssteuereinrichtung 45 in ein Druckkraftsignal 46 gewandelt wird, welches die ermittelte Andruckkraft oder Betätigungskraft angibt. Ferner ist mit der Berührfläche 31 oder, sofern die Berührfläche 31 fest mit der Anzeigefläche 21 verbunden ist, mit dem Touchscreen 10 mindestens eine Aktoreinrichtung 50 gekoppelt, die einen Aktor 51 umfasst, der von einer Aktor-Steuereinrichtung 55 gesteuert wird.

Die Bedienvorrichtung 1 umfasst ferner eine in dem Gehäuse 5 angeordnete Haptik-Steuereinrichtung 100, welche zumindest mit der Druckmesssteuereinrichtung 45, d. h. der Druckkraftmessvorrichtung 40, und der Aktor-Steuereinrichtung 55, d. h. mit der Aktoreinrichtung 50, verbunden ist. Die Haptik-Steuereinrichtung 100 ist ausgebildet, anhand der erfassten Andruckkräfte Aktor-Aktivierungssignale 106 zu erzeugen, die dann von der Aktorsteuerung 55 so umgesetzt werden, dass der Aktor 51 die Berührfläche 31 der berührungsempfindlichen Positionserfassungsvorrichtung 30 auslenkt, so dass ein haptisch wahrnehmbarer Effekt entsteht.

Bei der einfachsten Ausführungsform prüft die Haptiksteuereinrichtung 100 die erfasste Andruckkraft oder Betätigungskraft gegenüber einer ersten Kraftschwelle bzw. einem erste Kraftschwellenwert. Wird diese Kraftschwelle bzw. der erste Kraftschwellenwert erreicht oder überschritten, so wird ein erstes Aktor-Aktivierungssignal 106 erzeugt, welches eine erste haptische Rückkopplung über die Aktor-Steuereinrichtung 55 und den Aktor 51 an der Berührfläche 31 bewirkt. Wird anschließend nachdem die erste Kraftschwelle bzw. der erste Kraftschwellenwert durch die erfasste Andruck- oder Betätigungskraft einmal erreicht oder überschritten wurde, eine zweite Kraftschwelle bzw. ein zweiter Kraftschwellenwert, welcher geringer als der erste Kraftschwellenwert ist, unterschritten, wird ein zweites Aktor-Aktivierungssignal 106 erzeugt, welches über die Aktor-Steuereinrichtung 55 und den Aktor 51 einen zweiten haptischen erfassbaren Effekt an der Berührfläche 51 bewirkt. Vorzugsweise sind die beiden erfassbaren haptisch Effekte unterschiedlich, so dass ein Nutzer diese unterscheiden kann. Besonders bevorzugt sind die haptischen Effekte als kurze möglichst einmalige Auslenkungen der Berührfläche ausgeführt. Diese unterscheiden sich vorzugsweise hinsichtlich der Auslenkungsamplitude, wobei die Auslenkungsamplitude bei dem haptischen Effekt, welcher durch das erste Aktor-Aktivierungssignal erzeugt wird, vorzugsweise größer als bei dem haptischen Effekt ist, der durch das zweite Aktor-Aktivierungssignal ausgelöst wird. Um die sensorische Wahrnehmung durch einen Nutzer zu verbessern, insbesondere um Tastenbedienelemente besser durch den Touchscreen 10 nachbilden zu können, wird vorzugsweise durch die Haptik-Steuerung 100 auch jeweils ein Klang-Aktivierungssignal 108 an einen Klanggenerator 60 ausgegeben, der über einen an oder in dem Gehäuse angeordneten Lautsprecher 70 synchronisiert mit der über den Aktor 51 bewirkten Auslenkung der Berührfläche 31 ein Klangsignal oder einen Klang ausgibt. Hierbei ist vorzugsweise in der Haptik-Steuereinrichtung 100 eine Verzögerungseinrichtung 160 vorgesehen, welche das entsprechende Aktor-Aktivierungssignal 106 und das Klang-Aktivierungssignal 108 gegeneinander so verzögern, dass eine maximale Auslenkung der Berührfläche 31 zeitgleich mit dem ausgeben des Klangsignals erfolgt. Durch die Ausgabe des Klangsignals zeitlich synchronisiert mit den haptischen Rückkopplungen wird eine dem Nutzer vertraute sensorische Wahrnehmung einer Tastenbedienung besser nachgebildet. Hierbei ist durch die Anordnung des Lautsprechers 70 an oder in dem Gehäuse 5 gewährleistet, dass der Nutzer aufgrund seines räumlichen Hörvermögens das ausgegebene akustische Klangsignal mit dem haptischen Effekt korreliert, da dieses als von dem Ort der Berührung kommend wahrgenommen wird. Der Rückkopplungseffekt wird gestärkt. Es hat sich gezeigt, dass die Rückkopplung, welche durch ein lokal benachbart zu der Berührfläche ausgegebenes akustisches Klangsignal unterstützt ist, als intensive Rückkopplung wahrgenommen wird. Es hat sich ebenfalls ergeben, dass eine haptische Rückkopplung mit einer reduzierten mechanischen Auslenkung, die durch ein lokal synchronisiert ausgegebenes Klangsignal ergänzt ist, genauso intensiv wahrgenommen wird, wie eine Rückkopplung mit erhöhter mechanisierter Auslenkung ohne Klangunterstützung. Es kann somit ein schwächerer Aktor eingesetzt werden, wenn eine synchronisierte, lokal ausgegebene Klangunterstützung genutzt wird. Hierdurch wird ferner der Verschleiß aufgrund geringerer Auslenkung der Berührfläche bei einem nahezu genauso intensiv durch einen Nutzer wahrgenommen Rückkopplungseffekt minimiert.

Eine solche einfach Ausführungsform weist den Nachteil auf, dass eine haptische Rückkopplung bei einer berührenden Betätigung an jeder Position ausgegeben wird, unabhängig davon, ob dieser Position auf der Anzeigefläche über eine Mensch-Maschine-Benutzerschnittstelle ein Auslösebereich eines virtuellen Bedienelements zugeordnet ist.

Bei einer weiter bevorzugten Ausführungsform ist daher die Haptik-Steuereinrichtung 100 vorzugsweise ebenfalls mit der Positionserfassungssteuereinrichtung 35 gekoppelt, so dass die Haptik-Steuereinrichtung 100 zusätzlich prüft, ob die erfasste Berührposition in einem Auslösebereich eines virtuellen Bedienelements liegt. Ist dies der Fall, so erfolgt eine Ausgabe der Aktor-Aktivierungssignale 106 und gegebenenfalls der Klang-Aktivierungssignale 108 bei Überschreiten der ersten Kraftschwelle bzw. des ersten Kraftschwellenwerts und bei dem nachfolgenden Unterschreiten der zweiten Kraftschwelle bzw. des zweiten Kraftschwellenwerts. Zusätzlich kann die Haptik-Steuereinrichtung 100 so ausgebildet sein, dass sie anhand der erfassten Berührposition den Auslösebereich ermittelt, in dem die Berührposition erfasst ist, während die erste Kraftschwelle überschritten wird und hierüber eine Bedienfunktion ermitteln, die dem entsprechenden Auslösebereich zugeordnet ist. Somit ist es möglich, dass die Haptik-Steuereinrichtung 100 ein Signal zur Funktionsauslösung erzeugt und beispielsweise über eine Schnittstellt 90 ausgibt.

Häufig ist die Mensch-Maschinen-Schnittstellen-Logik nicht vollständig in der Haptik-Steuereinrichtung 100 der Bedieneinheit umgesetzt, sondern ist zumindest teilweise in einem Zentralrechner 200 umgesetzt, der über eine Zentralrechnerschnittstelle 210 und einen Bus 300 mit der Schnittstelle 90 der Bedieneinheit 2 verbunden ist. Bei einer besonders bevorzugten Ausführungsform übermittelt der Zentralrechner 200 zumindest Informationen über die Aktivierungsbereiche der einzelnen virtuellen Bedienelemente, für die bei einer berührenden Betätigung mit der ausreichenden Andruckkraft, wie oben erläutert, die zwei verschiedenen haptischen Rückkopplungseffekte ausgegeben werden sollen. Somit ist die Haptik-Steuerung unabhängig von einer Übertragungsdauer von Information an den Zentralrechner und dessen Verarbeitungszeit in der Lage, zeitnah die haptischen Rückkopplungen zu erzeugen, sofern die erfasste Berührposition innerhalb eines der Auslösungsbereiche erkannt wird, während die erste Kraftschwelle überschritten bzw. die zweite Kraftschwelle unterschritten wird.

Es sind jedoch auch Ausführungsformen möglich, bei denen die gesamte oder nahezu die gesamte Funktionalität der Haptik-Steuereinrichtung 100, wie sie bisher beschrieben ist, im Zentralrechner 200 umgesetzt ist. An diesen werden dann die ermittelten Andruckkraftwerte sowie erfassten Berührpositionen übermittelt. Der Zentralrechner 200 wertet dann die Berührposition dahingehend aus, dass ermittelt wird, ob diese in einem Auslösebereich eines der virtuellen Bedienelemente liegt, wobei die virtuellen Bedienelemente jeweils mit einer zu bedienenden Funktion verknüpft sind. Über diese Auswertung wird somit eine auszulösende Funktion selektiert. Ist eine solche Selektion erfolgreich, werden zusätzlich die übermittelten Andruckkraftwerte ausgewertet und mit einer ersten Kraftschwelle, d.h. einem ersten Kraftschwellenwert, verglichen. Wird diese erreicht oder überschritten, wird das erste Aktor-Aktivierungssignal von dem Zentralrechner über den Bus 300 zu der Haptik-Steuereinrichtung 100 oder direkt zu der Aktor-Steuereinrichtung 55 übertragen. Analog kann zusätzlich ein Klang-Aktivierungssignal entweder über die Haptik-Steuereinrichtung 100 oder direkt an den Klanggenerator 60 übermittelt werden. Vorzugsweise werden lediglich Aktivierungsinformationen übermittelt und die konkreten Ansteuersignale in der Aktor-Steuereinrichtung 55 bzw. die an die Lautsprecher 70 ausgegebenen Klangsignale in dem Klangerzeuger 60 erzeugt.

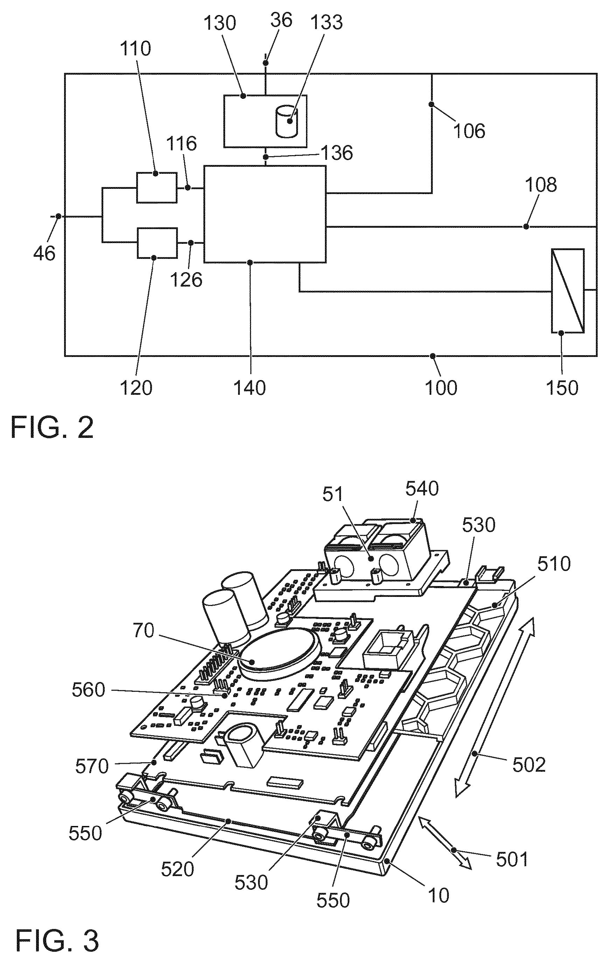

In Fig. 2 ist schematisch eine Ausführungsform einer Haptik-Steuereinrichtung 100 dargestellt. Diese umfasst zwei Vergleicher 110, 120, welche ein die Andruckkraft repräsentierendes Signal mit einer ersten Kraftschwelle und einer zweiten Kraftschwelle vergleichen. Ferner ist ein weiterer Vergleicher 130 vorgesehen, welcher ein Positionssignal 36 der erfassten Berührpositionen daraufhin auswertet, ob dieses in einem der Auslösebereiche eines der virtuellen Bedienelemente liegt. Hierfür erforderliche Informationen über die Auslösebereiche sind beispielsweise in einem Speicher 133 gespeichert. Vergleichsergebnissignale 116, 126, 136 werden von einer Haptik-Logik-Einrichtung 140 verarbeitet, welche die Aktor-Aktivierungssignale 106 und/oder entsprechenden Klang-Aktivierungssignale 108 erzeugt. Die einzelnen erfassten Signale, d. h. ein Positionssignal 36, ein Druckkraftsignal 46 sowie die Aktor-Aktivierungssignale 106 und gegebenenfalls die Klang-Aktivierungssignale 108 werden zusätzlich über eine Schnittstelle 150 ausgegeben. Über diese Schnittstelle 150 können auch Informationen über die Auslösebereiche, welche in dem Speicher 133 abgelegt werden, an die Haptik-Steuereinrichtung 100 übermittelt werden.

In Fig. 3 ist schematisch eine Rückansicht mehrerer Komponenten einer Bedieneinheit 2 dargestellt. Zu erkennen ist ein Touchscreen 10, dessen Anzeige- und Berührfläche von dem Betrachter abgewandt sind. Die Betätigungs- und Auslenkungsrichtung für die drückende Betätigung ist über einen Pfeil 501 angedeutet. Der Touchscreen 10 ist auf einer Halterplatte 510 angeordnet, welche zur Stabilisierung ein Wabenmuster aufweist. Diese Halterplatte 510 ist möglichst steif ausgebildet. Die Halterplatte 510 ist nur teilweise dargestellt. Zwischen der Halterplatte 510 und dem Touchscreen 10 ist ein Touchscreenträger 520 angeordnet, der an vier Ecken Halterungselemente 530 aufweist. Die Halterungselemente 530 und/oder der Touchscreenträger 520 sind so ausgebildet, dass der Touchscreen in Betätigungsrichtung elastisch ausgelenkt werden kann. Ferner sind an den Halterungselementen 530 Blattfedern 550 angebracht, welche eine bewegliche Lagerung an einem nicht dargestellten Gehäuse ermöglichen, so dass über einen Aktor 51 eine Auslenkung in der Ebene des Touchscreens 10 möglich ist, wie über einen Aktorik-Auslenkungspfeil 502 angedeutet ist. In Fig. 3 sind ferner Leiterplatinen 560, 570 schematisch dargestellt, in denen die verschiedenen lokalen Steuereinrichtungen wie beispielsweise die Anzeigesteuereinrichtung, die Druckmesssteuereinrichtung, die Haptik-Steuereinrichtung, die Aktor-Steuereinrichtung und ein Klanggenerator ausgebildet sind. Ferner sind ein Lautsprecher 70 sowie ein Aktor 51 zu erkennen, der einerseits am nicht dargestellten Gehäuse und andererseits an einem L-Profil 540 des Touchscreenträgers 520 befestigt ist.

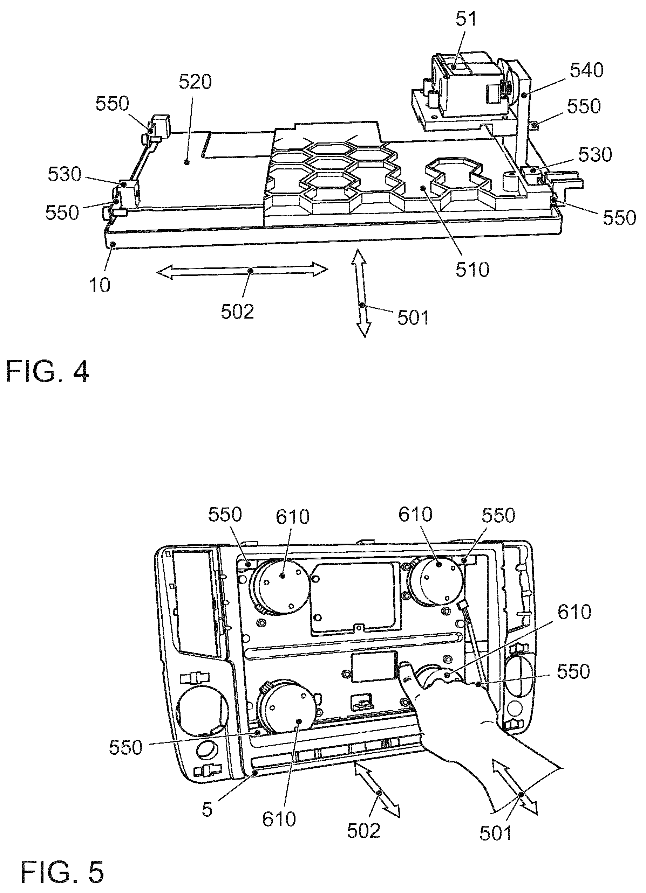

In Fig. 4 ist eine weitere schematische Ansicht ähnlich zu der der Fig. 3 gezeigt, bei der die Leiterplatten 560 und 570 fehlen. Gut zu erkennen ist das L-Profil 540.

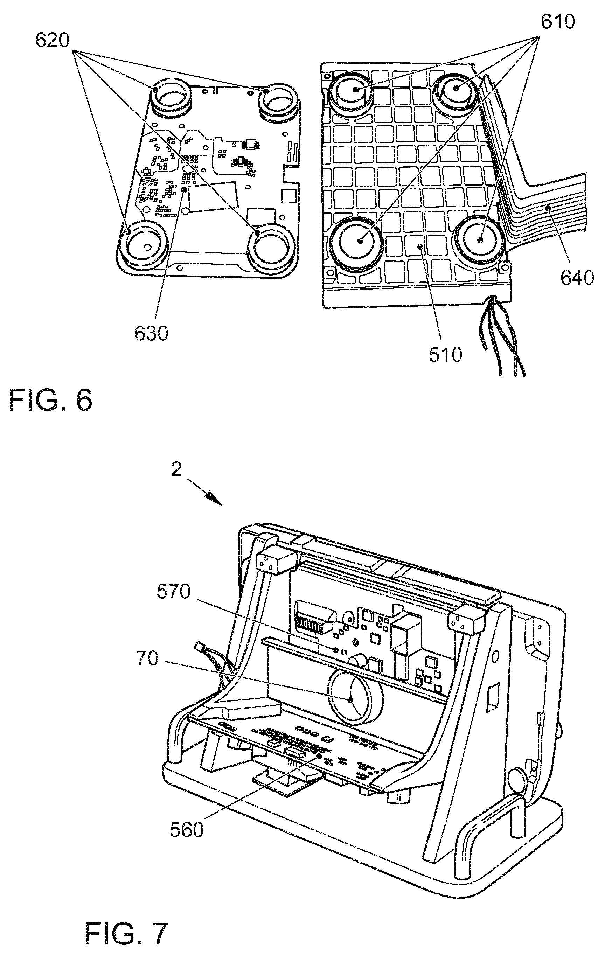

In den Fig. 5 und 6 ist eine alternative Ausgestaltung einer Bedieneinheit gezeigt. In Fig. 5 ist eine Vorderansicht des Gehäuses 5 zu erkennen, in welchem der Touchscreen, die lokalen Steuereinrichtungen sowie Aktoren angeordnet sind. In Fig. 5 sind aus Gründen der Veranschaulichung der Touchscreen sowie die Halteplatte und ein Touchscreenträger nicht dargestellt und fehlen. Ferner ist ein Abdeckrahmen des Gehäuses 5, welcher in der Regel einen Rand des Touchscreens überdeckt, um ein Eindringen von Staub und anderen Schmutzbestandteilen zu verhindern nicht gezeigt. Zu erkennen sind die Blattfedern 550, an welchen die Halterplatte des Touchscreens befestigt wird. Diese ist ferner mit Topfmagneten 610 verbunden, die an einer Unterseite der Halteplatte angeordnet sind (vgl. Fig.6). Diese greifen in Spulen 620 ein, die auf einer Elektronikplatine 630 angeordnet sind. Über eine Bestromung der Spulen können die Topfmagnete in Richtung einer Spulenachse 621, d. h. senkrecht zur Elektronikplatine bzw. der Halterplatte 510 ausgelenkt werden um ein haptisches Feedback an dem auf der nicht dargestellten Seite der Halteplatte 510 angeordneten Touchscreens, dessen Anschlüsse 640 in Fig. 6 zu erkennen sind, zu bewirken. Die Topfmagnete 610 bilden gemeinsam mit den Spulen 620 Aktoren aus. Auch eine auf den Touchscreen einwirkende Betätigungskraft kann über diese Aktoren gemessen werden, die zugleich als Kraftmesssensoren dienen. Bei einer Auslenkung der Topfmagnete 610 in den Spulen 620 induzieren diese in die Spulen 620 einen Strom, welcher ausgewertet werden kann, um die Andruckkraft, welche zu einer Beschleunigung des Touchscreens und hierüber der Halterplatte und der Topfmagnet geführt hat, zu ermitteln.

In Fig. 7 ist eine Rückansicht einer zusammengebauten Bedieneinheit 2 gezeigt. Zu erkennen sind der Lautsprecher 70, Gehäusebestandteile 6 sowie Leiterplatten 560, 570, in denen Steuereinrichtungen, wie oben beschrieben, umgesetzt sind.

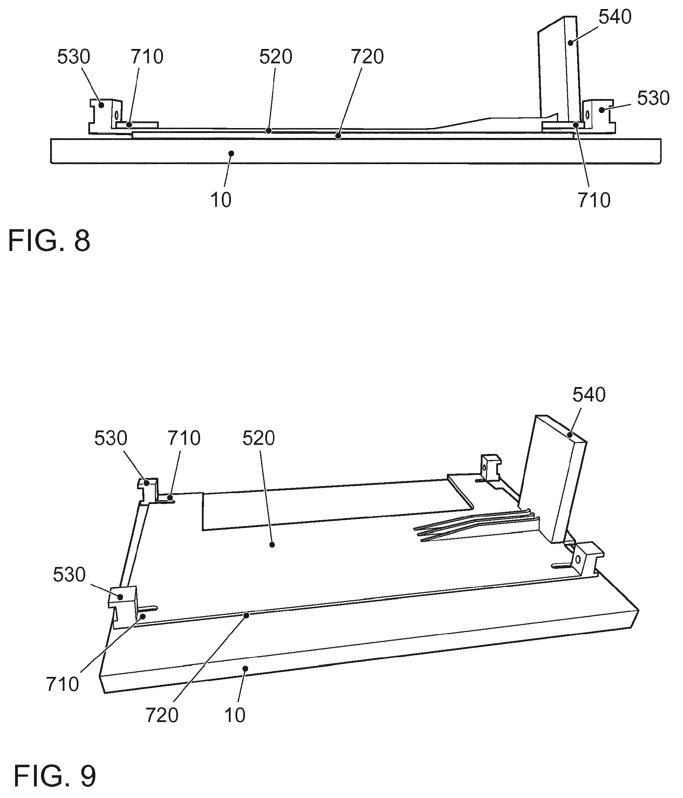

In Fig. 8 ist exemplarisch eine schematische Seitenansicht eines Touchscreens 10, der auf einem Touchscreenträger 520 mit einem L-Profil 540 angeordnet ist, gezeigt. Der Touchscreen 10 ist mit dem Touchscreenträger 520 beispielsweise über eine Klebeschicht 720 verbunden. Angrenzend an die Halterungselemente 530 sind Dehnungsmessstreifen 710 angeordnet, welche ihre Eigenschaften, insbesondere ihre elektrischen Eigenschaften bei einer Verformung des Touchscreenträgers 520 im Bereich der Halterungselemente und/oder einer Verformung der Halterungselemente 530 aufgrund einer auf dem Touchscreen wirkenden Betätigungskraft verändern. Diese Änderung der elektronischen Eigenschaften, beispielsweise des Widerstands, wird über die Druckmesssteuereinrichtung (nicht dargestellt) in ein Druckkraftsignal gewandelt. Das Druckkraftsignal gibt die Stärke der erfassten Andruckkraft an. Die Druckmesssteuereinrichtung ist darüber hinaus in der Lage, die an den verschiedenen Dehnungsmessstreifen 710 erfassten Änderungen in das eine Druckkraftsignal zu wandeln.

In Fig. 9 ist eine perspektivische Ansicht des Touchscreens 10 gezeigt, der an dem Touchscreenträger 520 befestigt ist, beispielsweise mittels einer Klebeschicht 720.

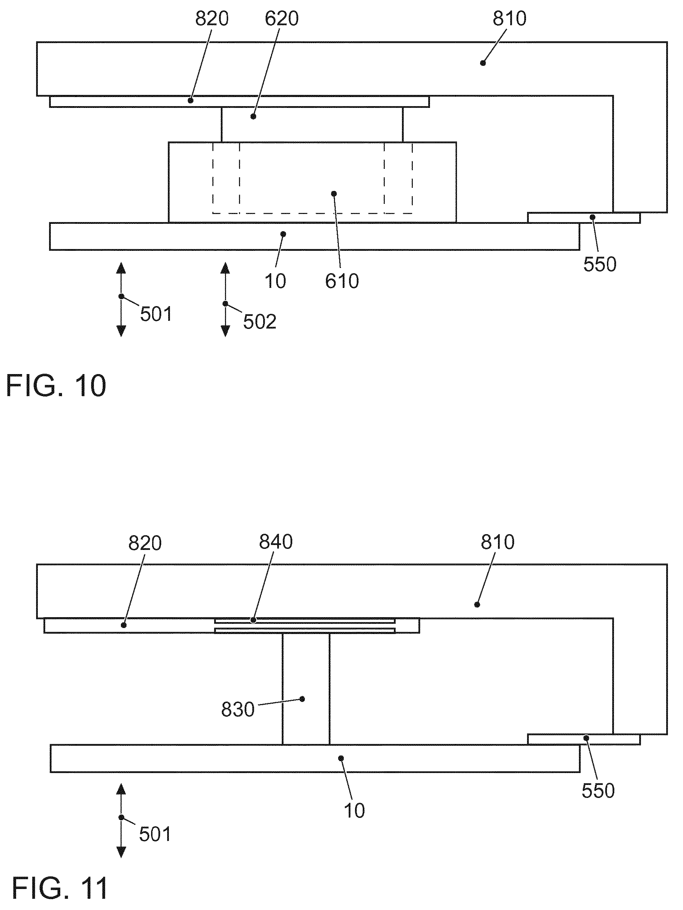

In Fig. 10 ist die Druckkrafterfassung mittels einer induktiven Aktorik noch einmal schematisch dargestellt. Zu erkennen ist der Touchscreen 10, der über Blattfedern 550 an einem Halterahmen 810 des Gehäuses 5 elastisch und beweglich gelagert ist. Mit dem Touchscreen 10 ist ein Topfmagnet 610 fest verbunden, der in eine Spule 620 eingreift, die mit einer Aktor-Steuereinrichtung auf einer Leiterplatine 820 verbunden ist, die zugleich die Druckmesssteuereinrichtung umfasst. Die Leiterplatine 820 ist fest mit dem Halterahmen 810 verbunden, so dass die Spule gegen den Halterahmen 810 und somit das Gehäuse abgestützt ist und eine Auslenkung des Touchscreens relativ zu dem Gehäuse in der Betätigungsrichtung, welche über den Betätigungsrichtungspfeil 501 angedeutet ist, bewirken kann. Die Aktorauslenkung findet parallel hierzu statt, wie der Aktor-Auslenkungspfeil 502 andeutet.

In Fig. 11 ist schematisch eine weitere Möglichkeit zum Erfassen der Betätigungskraft schematisch dargestellt. Erneut ist der Touchscreen 10 über eine Blattfeder 550 an einem Halterahmen 810 elastisch für eine Auslenkung in der Betätigungsrichtung, welche über den Betätigungsrichtungspfeil 501 angedeutet ist, gelagert. Mit dem Touchscreen 10 oder dessen Halteplatte oder Touchscreenträger (beide nicht dargestellt) ist ein Stößel 830 fest verbunden. Der mechanisch auf einen Plattenkondensator 840 mechanisch einwirkt, der in einer Leiterplatte 820, die an dem Halterahmen 810 abgestützt ist ausgebildet ist. Wird der Touchscreen 10 in das Gehäuse 5 bei einem Betätigen hineingedrückt, so drückt der Stößel auf den Plattenkondensator 840 und verändert somit einen Plattenabstand, welches wiederum eine Kapazität des Plattenkondensators 840 ändert. Aus dieser Kapazitätsänderung, die bei einem geladenen Kondensator beispielsweise mit einer Spannungsänderung zwischen den Kondensatorplatten einhergeht, kann die einwirkende Druckkraft abgeleitet werden.

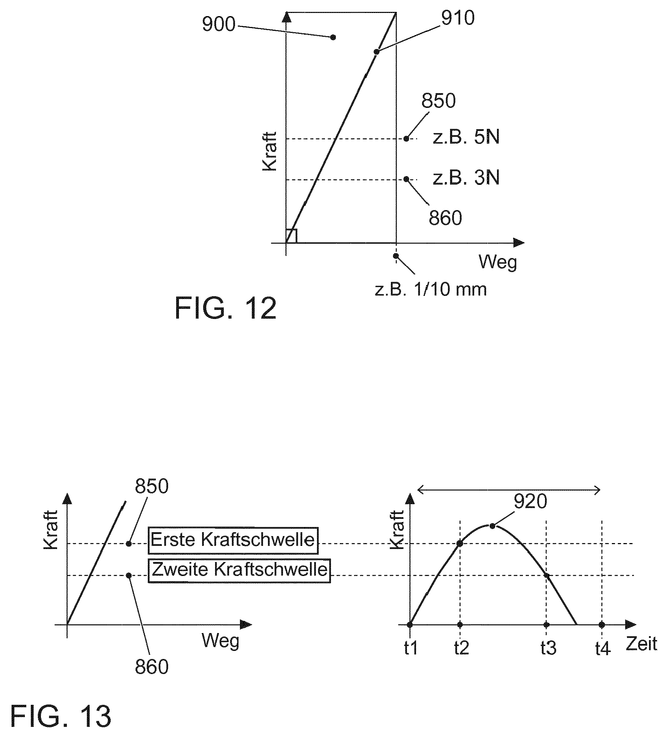

Die Berührfläche der berührungsempfindlichen Positionserfassungsvorrichtung, welche vorzugsweise in einem Touchscreen integriert ist, ist in dem Gehäuse vorzugsweise so gelagert, dass eine elastische Auslenkung in Betätigungsrichtung so erfolgt, dass zwischen der Auslenkung und der hierfür benötigten Kraft ein linearer Zusammenhang besteht. Dieses ist in Figur 12 grafisch aufgetragen. Gezeigt ist der Arbeitsbereich 900 der Kraftmesseinrichtung. Aufgetragen ist die benötigte Kraft in Abhängigkeit von der hiermit bewirkten Auslenkung. Eine Steigung 910 gibt eine Steifigkeit der Kraftmessung an. Es werden Ausführungsformen bevorzugt, bei denen die Auslenkung möglichst minimal ist, beispielsweise weniger als ein Zehntel Millimeter beträgt. Ferner sind in Fig. 12 zwei Kraftschwellenwerte 850, 860 eingezeichnet. Ein erster Kraftschwellenwert 850, der zu einer größeren Andruck- oder Betätigungskraft zugeordnet ist, muss zunächst einmal bei einer Betätigung eines virtuellen Bedienelements erreicht oder überschritten werden, damit überhaupt eine Auslösung der mit dem virtuellen Bedienelement verknüpften Funktion erfolgen kann. Beim Erreichen oder Überschreiten der ersten Kraftschwelle bzw. des ersten Kraftschwellenwertes 850 wird ein erstes haptisches Feedback, eine erste haptische Rückkopplung, erzeugt. Ein zweites haptisches Feedback wird beim anschließenden Unterschreiten der zweiten Kraftschwelle bzw. des zweiten Kraftschwellenwertes 860, welcher einer geringeren Kraft als der erste Kraftschwellenwert 850 zugeordnet ist, ausgelöst. Das erste haptische Feedback und das zweite haptische Feedback unterscheiden sich. Vorzugsweise ist eine bewirkte maximale Auslenkung der Berührflächen der berührungsempfindlichen Positionserfassungsvorrichtung bei der mit Erreichen oder Überschreiten der ersten Kraftschwelle im Zusammenhang stehenden Rückkopplung größer als die maximale Auslenkung, die mit dem Unterschreiten der zweiten Kraftschwelle im Zusammenhang steht. Dieses entspricht dem haptischen Verhalten einer physisch ausgebildeten Taste. Wichtig ist, dass beim Unterschreiten des zweiten Kraftschwellenwerts 860 eine haptische Rückkopplung nur bewirkt wird, wenn zuvor der erste Kraftschwellenwert 850 erreicht oder überschritten wird.

In Fig. 13 ist die Andruckkraft während eines Betätigungsvorgangs neben der grafischen Darstellung des Zusammenhangs zwischen Auslenkung und benötigter Andruckkraft noch einmal grafisch dargestellt. Aufgetragen ist die typische Andruckkraft gegenüber der Zeit als Andruckkarftkurve 920 bei einem Betätigungsvorgang, welcher zum Auslösen einer mit einem virtuellen Bedienelement verknüpften Funktion führt. Zum Zeitpunkt t1 legt der Nutzer sein Betätigungselement, beispielsweise seinen Finger, auf die berührungsempfindlichen Positionserfassungsvorrichtung an einer Position, die im Auslösebereich des entsprechenden virtuellen Bedienelements liegt. Dieses ist vorzugsweise eine Position, die im Bereich der grafischen Darstellung des virtuellen Bedienelements liegt. Der Nutzer erhöht dann seinen Anpressdruck, bis er zum Zeitpunkt t2 mit der Betätigungskraft den ersten Kraftschwellenwert 850 überschreitet. Zu diesem Zeitpunkt wird ein erstes Aktor-Aktivierungssignal erzeugt und hierüber mittels eines Aktors eine impulsartige Auslenkung als erste haptische Rückkopplung an der Berührfläche erzeugt. Der Nutzer registriert hierüber, dass er das virtuelle Bedienelement erfolgreich betätigt hat und verringert den Anpressdruck. Beim Unterschreiten der zweiten Kraftschwelle beziehungsweise des zweiten Kraftschwellenwerts 860 zum Zeitpunkt t3 wird ein zweites Aktor-Aktivierungssignal erzeugt und hierüber eine zweite impulsartige von der ersten impulsartigen haptischen Rückkopplung verschiedene Rückkopplung, vorzugsweise in Form einer weiteren impulsartigen Auslenkung der Berührfläche, bewirkt. Dieses vermittelt dem Benutzer ein haptisches Feedback, wie er es von einem physisch ausgebildeten Bedienelement kennt, zum Zeitpunkt t4 hebt der Nutzer den Finger von der Berührfläche erneut ab.

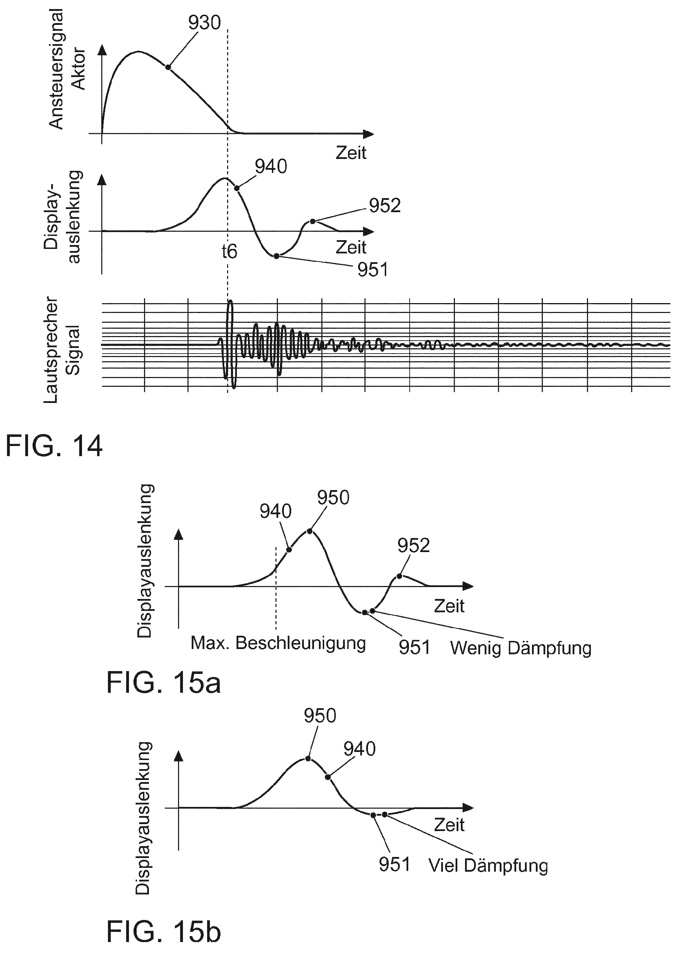

In Fig. 14 sind schematisch die Ansteuerung in Form eines Ansteuerungssignals 930 sowie daraus resultierende Auslenkung grafisch jeweils gegenüber der Zeit aufgetragen. Im oberen Graph ist das Ansteuersignal 930, wie es von der Aktor-Steuereinrichtung an den Aktor übermittelt wird, gegenüber der Zeit aufgetragen. Zu erkennen ist, dass ein kurzer Anregungspuls erzeugt wird. In dem mittleren Graphen ist die Displayauslenkung, d.h. die Auslenkung der Berührfläche, gegenüber der Zeit dargestellt. Zu erkennen ist, dass die Berührflächenauslenkung einen Maximalwert 955 einer impulsartigen Auslenkung 950 zu einem Zeitpunkt t6 erreicht, an dem das Ansteuerungssignal 930 bereits wieder nahezu den Nullwert erreicht hat. Je nach Bedämpfung der Berührfläche bzw. des Touchscreens ergeben sich ein oder zwei sogenannte Nach- oder Überschwinger. In einem dritten Graph ist das ausgegebene Lautsprechersignal 960 dargestellt, welches einen kurzen Klangimpuls repräsentiert. Dieses Lautsprechersignal 960 wird zeitlich verzögert gegenüber dem Ansteuerungssignal 930 des Aktors erzeugt, so dass eine maximale Auslenkung des akustischen Signals mit der maximalen Auslenkung der Berührfläche zusammen fällt.

In Fig. 15a und 15b sind beispielhafte Auslenkungen der Berührfläche gegenüber der Zeit für dasselbe Anregungssignal, wie dies in Fig. 14 dargestellt ist, gezeigt. Während die Lagerung der Berührfläche bei der Ausführungsform, welche mit dem Graphen nach Fig. 15a korrespondiert, lediglich schwach gedämpft ist, sodass es zu den bereits oben beschriebenen Überschwingern 951,952 kommt, ist hingegen bei einer stärkeren Bedämpfung (siehe Fig. 15b) neben der gewünschten impulsartigen Auslenkung 950 nur ein schwach ausgeprägter Überschwinger 951 zu beobachten. Das Auslenkungsverhalten, welches in Fig. 15b gezeigt ist, entspricht dem bevorzugten Auslenkungsverhalten.

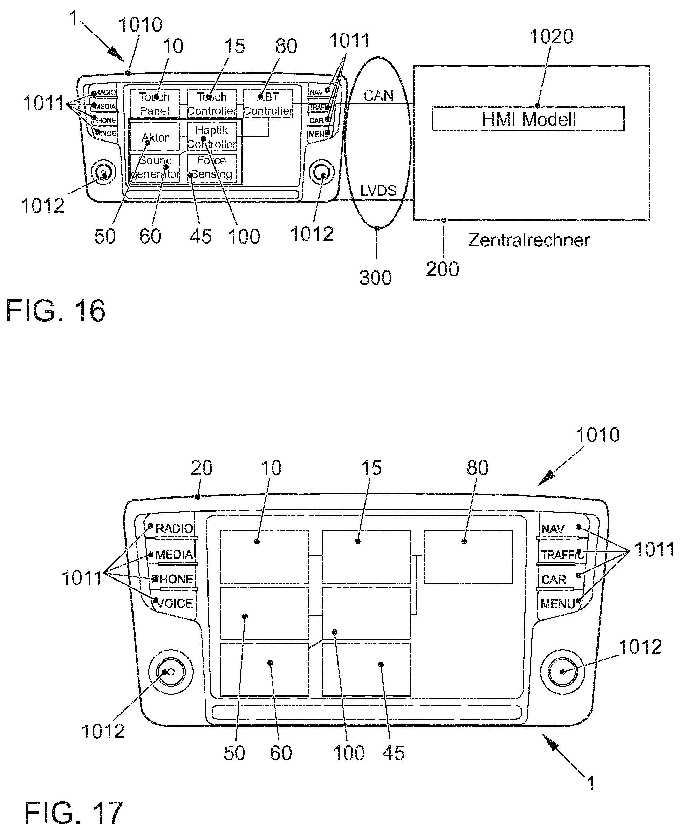

In Fig. 16 ist die Bedienvorrichtung 1 schematisch mit den verschiedenen Steuereinrichtungen gezeigt, welche eine Funktionsauslösung für virtuelle Bedienelemente mit der erfinderischen haptischen Rückkopplung ermöglichen. Die Bedienvorrichtung 1 umfasst die Bedieneinheit mit dem Gehäuse 5, in dem neben dem Touchscreen 10 weitere physisch ausgebildete Bedienelemente 1010 in Form von Tastern 1011 und Drehgebern 1012 ausgebildet sind. In dem Gehäuse 5 ist zum einen eine lokale Bedieneinheitssteuereinrichtung 80 integriert, welche beispielsweise eine Kommunikation mit einem Zentralrechner 200 über einen oder mehreren Busse 300 abwickelt. Beispielsweise können die Steuersignale, das heißt Aktor-Aktivierungssignale, Klang-Aktivierungssignale, Kraftschwellenauslösesignale, Kraftwerte, etc. über einen seriellen Bus, z.B. Einen CAN-Bus übertragen werten. CAN steht hierbei für Controller Area Network. Grafische Informationen werden vorzugsweise über einen LVDS-Bus übertragen. LVDS steht hierbei für low voltage differential signalling. Ferner ist die Bedieneinheitssteuereinrichtung 80 für die Verarbeitung von Signalen der physisch ausgebildeten Bedienelemente 1010 verantwortlich. Zusätzlich sind an oder in dem Gehäuse 5 ein Touchscreen 10 sowie eine Touchscreensteuereinrichtung 15 vorhanden, welche die Anzeigesteuereinrichtung sowie die Positionserfassungssteuereinrichtung umfasst (vergl. Fig. 1). Zusätzlich ist eine Haptik-Steuereinrichtung 100 vorhanden, die mit der Druckmesssteuereinrichtung 45 gekoppelt ist. Ferner sind mit der Haptik-Steuereinrichtung 100 der Aktoreinrichtung 50 sowie ein Klanggenerator 60 gekoppelt, welche über die Haptik-Steuereinrichtung 100 wie oben beschrieben zum Erzeugen eines haptischen und akustischen Feedbacks entsprechend angesteuert werden. Die Haptik-Steuerung kann vollständig in den lokal in das Gehäuse integrierten Steuereinrichtungen umgesetzt sein. Alternativ kann jedoch ein Teil der haptischen Rückkopplung über eine Mensch-Maschine-Schnittstelle gesteuert und beeinflusst werden, welche auf dem Zentralrechner in einem Mensch-Maschine-Modell 1020 umgesetzt ist.

In Fig. 17 ist eine Ausführungsform gezeigt, ähnlich zu der nach Fig. 16, bei der jedoch der Zentralrechner fehlt und die gesamte Haptik-Steuerung in den lokalen Steuereinrichtungen in dem Gehäuse 5 der Bedieneinheit 2 realisiert sind, in welchem der Touchscreen gelagert ist.

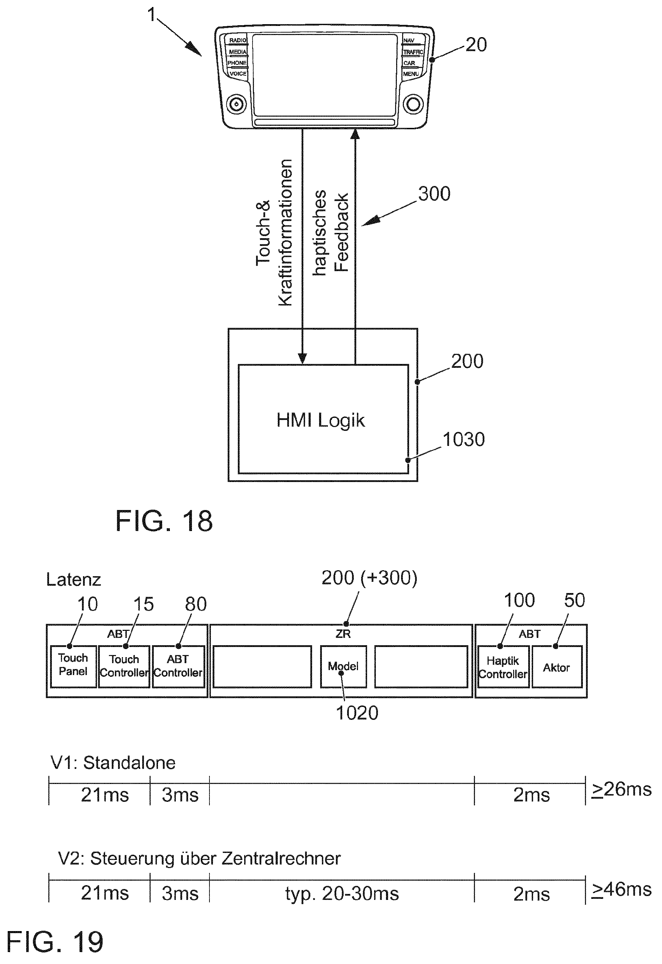

In Fig. 18 ist schematisch eine Ausführungsform dargestellt, bei der die gesamte Logik für die haptische Rückkopplung in dem Zentralrechner 200 ausgebildet ist. Über den Bus 300, beispielsweise ein CAN-Bus, werden Berührungs- und Kraftinformationen übertragen und in der Mensch-Maschine-Schnittstellen-Logik auf dem Zentralrechner ausgewertet, der Signale zum Steuern des haptischen Feedbacks an die lokalen Steuereinrichtungen in dem Gehäuse um den Touchscreen zurücküberträgt.

In Fig. 19 sind die Latenzzeiten unterhalb der einzelnen schematisch angedeuteten Steuereinrichtungen der Steuerung dargestellt. Bei der Variante, bei der die haptische Rückkopplung ohne den Zentralrechner realisiert ist, treten nur die Verarbeitungszeiten auf, die der Touchscreen 10 und dessen Touchscreensteuereinrichtung 15 sowie die Bedieneinheitssteuereinrichtung 80 verursachen. Zusätzlich treten die Zeiten auf, die die Haptik-Steuerung 100 und die Aktoreinrichtung 50 benötigen, um das haptische Rückkopplungssignal zu erzeugen.

Bei der alternativen Ausgestaltung, bei der die Logik in dem Zentralrechner 200 umgesetzt ist, kommen weitere Latenzzeiten hinzu, die für die Bus-Übertragung sowie die Auswertung der Logik im Zentralrechner benötigt werden. Die angegebenen Latenzzeiten für die einzelnen Komponenten entsprechen einer beispielhaften Ausführungsform. Eine akzeptable Gesamtlatenzzeit, die von einem Nutzer nicht als Zeitverzögert wahrgenommen wird, sollte 50 Millisekunden Reaktionszeit zwischen dem Ereignis der Kraftschwellenüberschreitung und dem haptischen Feedback nicht überschreiten.

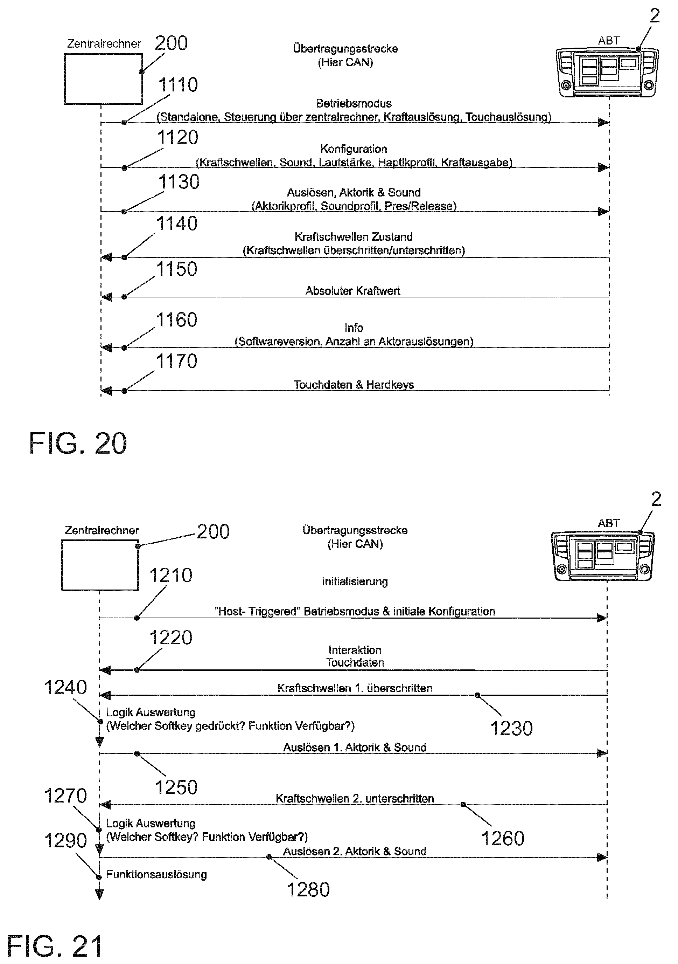

In Fig. 20 ist die Schnittstelle für die Kommunikation zwischen dem Zentralrechner und der lokal mit dem Touchscreen 10 ausgebildeten Bedieneinheit 2 dargestellt. Die Übertragungsstrecke kann beispielsweise ein CAN-Bus sein. Von dem Zentralrechner wird der Betriebsmodus 1110 der lokalen Bedieneinheit gesteuert. Hierüber kann festgelegt werden, dass die Haptik-Steuerung mit Rückgriff auf den Zentralrechner aufgeführt werden soll. Ebenso kann festgelegt werden, dass eine Aktivierung und Auslösung von virtuellen Bedienelementen nur bei einer ausreichenden Betätigungskraft oder bereits bei einer einfachen Berührung erfolgen soll. Ferner wird über diese Schnittstelle die lokale Bedieneinheit konfiguriert 1120, z.B. werden die Kraftschwellen festgelegt, die Klänge festgelegt, eine Lautstäke der akustischen Signale aber auch ein Anregungsprofil 1130 usw. Von den lokalen Steuereinrichtungen der Bedieneinheit 2 werden hingegen Kraftschwellenüberschreitungen 1140 sowie absolute Kraftwerte 1150 zum Zentralrechner übermittelt. Ferner Information 1160 über die lokalen vorhandenen Steuereinrichtungen und deren Versionsstand sowie Berührpositionen und Signale 1170, die mit der Betätigung von physisch ausgebildeten Bedienelementen zusammenhängen.

Anhand von Fig. 21 soll der Ablauf der übertragenen Nachrichten bei einem Bedienvorgang für eine Ausführungsform mit einer auf dem Zentralrechner ausgebildeten Bedienlogik erläutert werden. Zunächst wird ein Initialisierungsnachrichtenpaket 1210 von dem Zentralrechner zu der lokalen Bedieneinheit übertragen, welche die lokale Bedieneinheit konfiguriert. Findet eine Berührung statt, werden die Berührpositionsdaten 1220 an den Zentralrechner übermittelt. Wird anschließend ein Überschreiten oder Erreichen der ersten Kraftschwelle detektiert, so wird auch das Überschreiten der ersten Kraftschwelle an die Zentralrechner übermittelt 1230. Dieser führt eine Logikauswertung 1240 durch und erzeugt ein Signal zum Auslösen einer ersten haptischen und akustischen Rückkopplung 1250. Wird die zweite Kraftschwelle unterschritten, so wird dies erneut an den Zentralrechner übermittelt 1260, der nach einer weiteren Logikauswertung 1270 Signale zum Auslösen des zweiten haptischen Effekts und des zweiten Klangsignals an eine lokale Bedieneinheit überträgt 1280. Ferner veranlasst der Zentralrechner die Auslösung mit dem betätigten virtuellen Bedienelement im Zusammenhang stehende Funktion 1290.

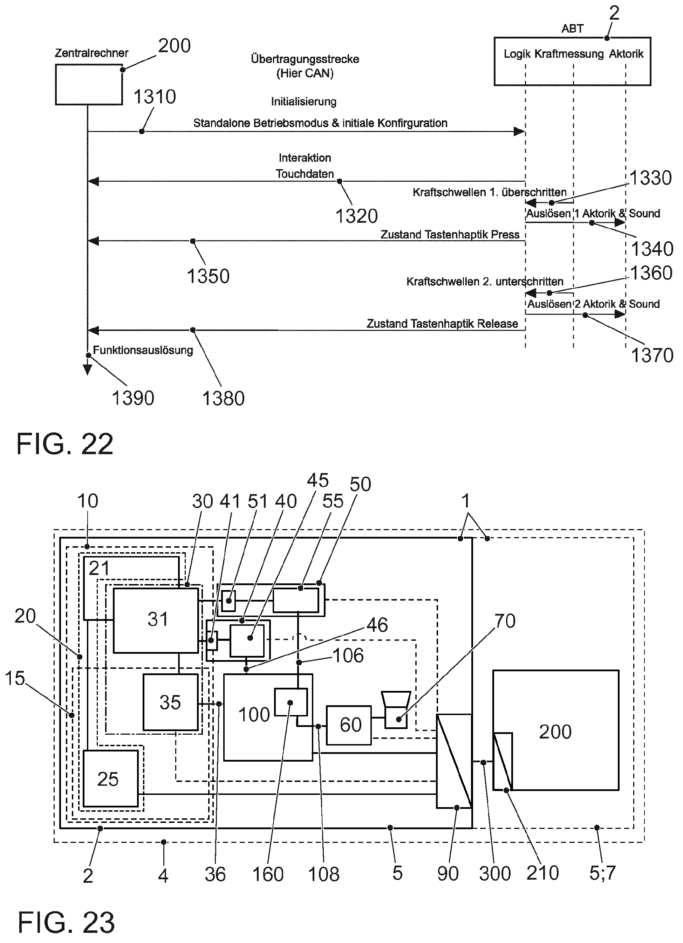

In Fig. 22 ist das Nachrichtentelegramm für eine Ausführungsform gezeigt, bei der die Haptikauslösung lokal in der lokalen Bedieneinheit 2 ausgeführt wird. Über den Zentralrechner 200 findet erneut eine Initialisierung 1310 statt, mit der die lokale Bedieneinheit konfiguriert wird. Ermittelte Berührpositionen werden erneut bei einer erfassten Betätigung an den Zentralrechner übermittelt 1320. Wird durch die Druckkraftmessung ermittelt, dass die erste Kraftschwelle überschritten wird 1330, so wird eine erste haptische und akustische Rückmeldung von der Haptik-Steuereinrichtung in der lokalen Bedienvorrichtung ausgelöst 1340. Dem Zentralrechner wird übermittelt 1350, dass das virtuelle Bedienelement vollständig niedergedrückt ist. Lässt der Nutzer das virtuelle Bedienelement wieder los, wird die zweite Kraftschwelle unterschritten. Sobald dies erkannt ist 1360, wird von der lokalen Haptik-Steuereinrichtung eine zweite haptische Rückkopplung über ein Aktor-Aktivierungssignal und ein Klang-Aktivierungssignal ausgegeben 1370. Dem Zentralrechner wird mitgeteilt 1380, dass der Benutzer die Taste wieder losgelassen hat. Der Zentralrechner veranlasst daraufhin eine Funktionsauslösung1390.

In Fig. 23 schematisch eine Vorrichtung 4 mit einer Bedienvorrichtung 1 dargestellt. Die Bedienvorrichtung 1 ist analog zu der nach Fig. 1 ausgebildet. Die Vorrichtung 4 ist eine technische Einrichtung, die eine interaktive Mensch-Maschine-Schnittstelle aufweist, um haptische Eingaben zu erfassen. Die Vorrichtung 4 kann beispielsweise ein Landfahrzeug, ein Luftfahrzeug, ein Wasserfahrzeug, ein Verkaufs- oder Informationsautomat, ein Telefon, insbesondere ein Smartphone oder anderes Mobiltelefon, ein Tabletcomputer, ein persönlicher Digitaler Assistent (PDA), ein Personalcomputer, ein interaktives Möbelstück, ein Fernseher, ein Haushaltsgerät, eine Produktions- oder Prozessanlage, ein Leitstand, ein Haushaltsgerät oder ein Geräts der Unterhaltungselektronik oder ein Spielautomat, eine Spielekonsole oder Ähnliches sein. Als interaktives Möbelstück werden sowohl Möbelstücke angesehen, welche beispielsweise über Aktoren anpassbar sind wie ein Bett oder ein Sessel, als auch Möbelstücke, welche eine Informationsvermittlung ermöglichen, wie ein Tisch mit einer Tischplatte, die ganz oder teilweise als Bildschirm ausgebildet ist, oder ein Wandpanel mit einem Bildschirm etc.

Bei einigen Ausführungsformen ist das Gehäuse 5 ähnlich wie in Fig. 1 an oder in der Vorrichtung 4 angeordnet und vorzugsweise befestigt. Hierfür kann das Gehäuse 5 Befestigungselement aufweisen. Mit diesen ist das Gehäuse 5 der Bedienvorrichtung 1 in einem Vorrichtungsgehäuse 7 der Vorrichtung 4 oder an dem Vorrichtungsgehäuse 7 der Vorrichtung 4 befestigt.

Bei anderen Ausführungsformen ist das Gehäuse 5 der Bedieneinrichtung identisch oder zumindest teilweise identisch mit dem Vorrichtungsgehäuse 7 der Vorrichtung 4. Dieses gilt insbesondere bei Ausführungsformen, bei denen die Anzeigefläche 21 der frei programmierbaren Anzeigevorrichtung 20 mehr als eine Hälfte einer Seitenfläche, bevorzugt einer flächenmäßig größten Seitenfläche, bedeckt oder einnimmt. Tabletcomputer, Smartphones, PDA seien hier beispielhaft für solche Ausführungsformen genannt. Ein Zentralrechner 200 der Vorrichtung 4 ist dann räumlich in dem Gehäuse 5 der Bedienvorrichtung 4, welches dann auch das Vorrichtungsgehäuse 7 ist, angeordnet. Die funktionellen Vorteile bleiben dennoch bestehen, da die Bedienvorrichtung 1 nur ein Bestandteil der Vorrichtung 4 ist und andere Bestandteile Funktionen bereitstellen, die über die Bedienvorrichtung 1 zu bedienen sind.

Die Bedienvorrichtung 1 umfasst eine Bedieneinheit 2 mit dem Gehäuse 5, welches in der Vorrichtung 4 so angeordnet ist oder so ausgebildet ist, dass eine mit einer frei programmierbaren Anzeigevorrichtung 20 verknüpfte berührungsempfindliche Positionserfassungsvorrichtung 30 eine Außenfläche der Vorrichtung 4 bildet. Bei den meisten Ausführungsformen ist eine Anzeigefläche 21 der frei programmierbaren Anzeigevorrichtung 20 fest mit einer Berührfläche 31 der berührungsempfindlichen Positionserfassungsvorrichtung 30 verbunden. Die Kombination einer Anzeigefläche 21 und einer davor angeordneten und fest verbundenen transparenten Berührfläche 31 einer verknüpften berührungsempfindlichen Positionserfassungsvorrichtung 30 wird auch als Touchscreen 10 bezeichnet. Zumindest die Berührfläche 31 der berührungsempfindlichen Positionserfassungsvorrichtung 30 ist beweglich gegenüber dem Gehäuse 5, vorzugsweise elastisch, gelagert.

Mit der Berührfläche 31 oder, falls die Berührfläche mit der frei programmierbaren Anzeigevorrichtung 20 fest verbunden ist, mit dem Touchscreen 10 ist eine Druckkraftmessvorrichtung 40 gekoppelt, welche in der Lage ist, bei einer berührenden Betätigung eine senkrecht zur Berührfläche 31 auf diese einwirkende Betätigungskraft zu messen. Beispielsweise können mit der Berührfläche 31 ein oder mehrere Sensorelemente 41 verbunden sein, welche bei einer Auslenkung der Berührfläche 31 ein Signal erzeugen, welches von einer Druckmesssteuereinrichtung 45 in ein Druckkraftsignal 46 gewandelt wird, welches die ermittelte Andruckkraft oder Betätigungskraft angibt. Ferner ist mit der Berührfläche 31 oder, sofern die Berührfläche 31 fest mit der Anzeigefläche 21 verbunden ist, mit dem Touchscreen 10 mindestens eine Aktoreinrichtung 50 gekoppelt, die einen Aktor 51 umfasst, der von einer Aktor-Steuereinrichtung 55 gesteuert wird.

Die Bedienvorrichtung 1 umfasst ferner eine in dem Gehäuse 5 angeordnete Haptik-Steuereinrichtung 100, welche zumindest mit der Druckmesssteuereinrichtung 45, d. h. der Druckkraftmessvorrichtung 40, und der Aktor-Steuereinrichtung 55, d. h. mit der Aktoreinrichtung 50, verbunden ist. Die Haptik-Steuereinrichtung 100 ist ausgebildet, anhand der erfassten Andruckkräfte Aktor-Aktivierungssignale 106 zu erzeugen, die dann von der Aktorsteuerung 55 so umgesetzt werden, dass der Aktor 51 die Berührfläche 31 der berührungsempfindlichen Positionserfassungsvorrichtung 30 auslenkt, so dass ein haptisch wahrnehmbarer Effekt entsteht.

Bei der einfachsten Ausführungsform prüft die Haptiksteuereinrichtung 100 die erfasste Andruckkraft oder Betätigungskraft gegenüber einer ersten Kraftschwelle bzw. einem ersten Kraftschwellenwert. Wird diese Kraftschwelle bzw. der erste Kraftschwellenwert erreicht oder überschritten, so wird ein erstes Aktor-Aktivierungssignal 106 erzeugt, welches eine erste haptische Rückkopplung über die Aktor-Steuereinrichtung 55 und den Aktor 51 an der Berührfläche 31 bewirkt. Wird anschließend nachdem die erste Kraftschwelle bzw. der erste Kraftschwellenwert durch die erfasste Andruck- oder Betätigungskraft einmal erreicht oder überschritten wurde, eine zweite Kraftschwelle bzw. ein zweiter Kraftschwellenwert, welcher geringer als der erste Kraftschwellenwert ist, unterschritten, wird ein zweites Aktor-Aktivierungssignal 106 erzeugt, welches über die Aktor-Steuereinrichtung 55 und den Aktor 51 einen zweiten haptischen erfassbaren Effekt an der Berührfläche 51 bewirkt. Vorzugsweise sind die beiden erfassbaren haptisch Effekte unterschiedlich, so dass ein Nutzer diese unterscheiden kann. Besonders bevorzugt sind die haptischen Effekte als kurze möglichst einmalige Auslenkungen der Berührfläche ausgeführt. Diese unterscheiden sich vorzugsweise hinsichtlich der Auslenkungsamplitude, wobei die Auslenkungsamplitude bei dem haptischen Effekt, welcher durch das erste Aktor-Aktivierungssignal erzeugt wird, vorzugsweise größer als bei dem haptischen Effekt ist, der durch das zweite Aktor-Aktivierungssignal ausgelöst wird. Andere Ausführungsformen weisen eine verbesserte Haptik-Steuerung analog zu denen auf, die oben im Zusammenhang mit den anderen Ausführungsformen bereits erläutert sind. Ferner sind auch die übrigen technischen Merkmale dieser Ausführungsform, die gleiche Bezugszeichen wie Merkmale der anderen Ausführungsformen aufweisen, technisch identisch und weisen dieselben Vorteile auf wie in den anderen Ausführungsformen.

Es ergibt sich für den Fachmann, dass unterschiedliche Ausgestaltungsmöglichkeiten der Erfindung möglich sind. Wesentlich ist, dass die Steuerung eine Logik umfasst, welche eine erste und eine zweite hiervon verschiedene Kraftschwelle auswerten und zwei getrennt voneinander bewirkte haptische Rückkopplungen erzeugt werden, die für den Nutzer getrennt wahrnehmbar sind. Diese sind vorzugsweise impulsartig ausgebildet, besonders bevorzugt so, dass jeweils lediglich eine impulsartige Auslenkung aus der Ruhelage, besonders bevorzugt der Andruckkraft des Nutzers entgegenwirkend, verursacht werden. Ferner werden bevorzugt akustische Signale oder Klänge zeitlich synchronisiert, lokal benachbart zu der Berührfläche der Bedienvorrichtung ausgegeben, sodass aufgrund der räumlichen Hörwahrnehmung ein Ursprung des Klangs der Berührposition zugeordnet wird und somit das gesamte sensorische Empfinden für einen menschlichen Benutzer verbessert wird, um eine physische Taste nachzubilden. Die Steuerung kann, wie oben ausführlich erläutert ist, zum einen in der lokalen Bedieneinheit, in der der Touchscreen oder die berührungsempfindliche Positionserfassungseinrichtung elastisch beweglich gelagert ist, oder im Zusammenwirken mit einem Zentralrechner, der räumlich abgesetzt von dem Touchscreen im Fahrzeug untergebracht ist, ausgeführt werden. Mischformen der Verteilung der Logik und Steuerung sind möglich. Sowohl im Zentralrechner als auch in lokalen Steuereinrichtungen können Teile der Logik über Software im Zusammenwirken mit einem Mikroprozessor umgesetzt sein.

### Bezugszeichenliste

- 1: Bedienvorrichtung
- 2: Bedieneinheit
- 3: Kraftfahrzeug
- 4: Vorrichtung (z.B. ein Automat, ein Smartphone, ein Leitstand etc.)
- 5: Gehäuse
- 6: Gehäusebestandteile
- 7: Vorrichtungsgehäuse
- 10: Touchscreen
- 15: Touchscreensteuereinrichtung
- 20: frei programmierbare Anzeigevorrichtung
- 21: Anzeigefläche
- 25: Anzeigesteuereinrichtung
- 30: berührungsempfindliche Positionserfassungsvorrichtung
- 31: Berührfläche
- 35: Positionserfassungssteuereinrichtung
- 36: Positionssignal
- 40: Druckkraftmessvorrichtung
- 41: Sensorelement
- 45: Druckmesssteuereinrichtung
- 46: Druckkraftsignal
- 50: Aktoreinrichtung
- 51: Aktor
- 55: Aktor-Steuereinrichtung
- 60: Klanggenerator
- 70: Lautsprecher
- 80: Bedieneinheitssteuereinrichtung
- 100: Haptik-Steuereinrichtung
- 106: Aktor-Aktivierungssignal
- 108: Klang-Aktivierungssignal
- 110: erster Vergleicher
- 116: Vergleichsergebnissignal (erste Kraftschwelle)
- 120: zweiter Vergleicher
- 126: Vergleichsergebnissignal (zweiter Kraftschwelle)
- 130: weiterer Vergleicher
- 133: Speicher
- 136: Vergleichsergebnissignal (Auslösebereichsposition)
- 140: Haptik-Logik-Einrichtung
- 150: Schnittstelle
- 160: Verzögerungseinrichtung
- 200: Zentralrechner
- 210: Zentralrechnerschnittstelle
- 300: BUS
- 501: Betätigungsrichtungspfeil
- 502: Aktorauslenkungsrichtungspfeil
- 510: Halterplatte
- 520: Touchscreenträger
- 530: Halterungselement
- 540: L-Profil
- 550: Blattfeder
- 560: Leiterplatte
- 570: Leiterplatte
- 610: Topmagnet
- 620: Spule
- 621: Spulenachse
- 630: Elektronikplatine
- 640: Anschlüsse
- 710: Dehnungsmessstreifen
- 720: Klebeschicht
- 810: Halterahmen
- 820: Leiterplatte
- 830: Stößel
- 840: Plattenkondensator
- 850: erster Kraftschwellenwert
- 860: zweiter Kraftschwellenwert
- 900: Arbeitsbereich
- 910: Steigung
- 920: Andruckkraftkurve
- 930: Ansteuerungssignal
- 940: Auslenkung
- 950: impulsartige Auslenkung
- 951: Überschwinger
- 952: Überschwinger
- 960: Lautsprechersignal
- t1-t5: Zeitpunkte
- 1010: physische Bedienelemente
- 1011: Taster
- 1012: Drehgeber
- 1020: Mensch-Maschine-Modell
- 1030: Mensch-Maschine-Schnittstellen-Logik
- 1110: Betriebsmodus festlegen
- 1120: Konfiguration
- 1130: Festlegen der Anregungsprofile
- 1140: Kraftschwellenüberschreitung
- 1150: Kraftwerte
- 1160: Versionsinformationen
- 1170: Berührpositionen/Bedienelementsignale
- 1210: Initialisierung
- 1220: Übermitteln Berührpositionsdaten
- 1230: Übermitteln Überschreitung der ersten Kraftschwelle
- 1240: Logikauswertung
- 1250: Auslösen erster Rückkopplung
- 1260: Übermitteln Unterschreitung der zweiten Kraftschwelle
- 1270: weitere Logikauswertung
- 1280: Auslösen zweiter Rückkopplung
- 1290: Funktionsauslösung
- 1310: Initialisierung
- 1320: Übermitteln Berührpositionsdaten
- 1330: Überschreiten der ersten Kraftschwelle detektiert
- 1340: Auslösen erster Rückkopplung
- 1350: Übermitteln Überschreitung der ersten Kraftschwelle (virtuelles Bedienelement vollständig gedrückt)
- 1360: Erkennen der Unterschreiten der zweiten Kraftschwelle
- 1370: Auslösen zweiter Rückkopplung
- 1380: Übermitteln Unterschreitung der zweiten Kraftschwelle
- 1390: Funktionsauslösung

## Patentansprüche

1. Bedienvorrichtung (1), insbesondere für ein Kraftfahrzeug (3), umfassend: ein Gehäuse (5), einen Touchscreen(10), welcher eine Anzeigevorrichtung (20) mit einer frei programmierbaren Anzeigefläche (21) zum Darstellen mindestens eines virtuellen Bedienelements und eine berührungsempfindliche Positionserfassungsvorrichtung (30) mit einer vor der Anzeigefläche (21) angeordneten Berührfläche (31) aufweist, wobei zumindest die Berührfläche (31) beweglich gegenüber dem Gehäuse (5) an diesem gelagert ist; mindestens eine Druckkraftmessvorrichtung (40) zum Ermitteln einer auf die Berührfläche (31) einwirkenden Andruckkraft bei einer berührenden Betätigung des Touchscreens (10); mindestens eine direkt oder indirekt mit der Berührfläche gekoppelte Aktoreinrichtung (50) zum gezielten Bewegen zumindest der Berührfläche (31) gegenüber dem Gehäuse (5); sowie eine Steuerung, welche ausgebildet ist, abhängig von den erfassten Berührpositionen und erfassten Andurckkräften zu ermitteln, ob eine korrekte haptische Betätigung des mindestens einen virtuellen Bedienelements vorliegt, und, sofern dieses der Fall ist, eine dem mindestens einen virtuellen Bedienelement zugeordnete Funktion auszulösen und die mindestens eine Aktoreinrichtung (50) anzusteuern, um eine haptische Rückkopplung an der Berührfläche (31) zu erzeugen, **dadurch gekennzeichnet, dass**
die Steuerung ausgebildet ist, die Andruckkräfte mit einem ersten Kraftschwellwert (850) und einem hiervon abweichenden zweiten Kraftschwellenwert (860) zu vergleichen, und beim Überschreiten des ersten Kraftschwellenwerts (850) ein erstes Aktor-Aktivierungssignal zu erzeugen, und bei einem anschließenden Unterschreiten des zweiten Kraftschwellenwerts (860) ein zweites von den ersten Aktor-Aktivierungssignal verschiedenes zweites Aktor-Aktivierungssignal zu erzeugen, wobei das erste und das zweite Aktor-Aktivierungssignal ausgestaltet sind, über die Aktoreinrichtung (50) jeweils eine haptische Rückkopplung an der Berührfläche (31) zu veranlassen und wobei die durch das erste Aktor-Aktivierungssignal und das zweite Aktor-Aktivierungssignal erzeugten haptisch wahrnehmbaren Rückkopplungen an der Berührfläche unterschiedlich sind, wobei die Steuerung ausgebildet ist, die haptischen Rückkopplungen jeweils in Form eines kurzen mechanischen Impulses zu erzeugen.

2. Bedienvorrichtung (1) nach Anspruch 1, **dadurch gekennzeichnet, dass** die Steuerung ausgebildet ist, die mindestens eine Funktion als auszulösende Funktion zu selektieren, wenn die erfasste Berührposition in einem Auslösebereich des mindestens einen virtuellen Bedienelements liegt, der dem mindestens einen virtuellen Bedienelement zugeordnet ist, und die haptischen Rückkopplungen nur zu erzeugen, sofern die mindestens eine Funktion als auszulösende Funktion selektiert ist.

3. Bedienvorrichtung (1) nach einem der vorangehenden Ansprüche, **dadurch gekennzeichnet, dass** an oder in dem Gehäuse (5) Lautsprecher (70) angeordnet ist und die Steuerung einen Klanggenerator (60) aufweist und ausgebildet ist, diesen Klanggenerator (60) so anzusteuern dass über den Lautsprecher (70) zeitlich synchronisiert mit einer durch die erste haptische Rückkopplung verursachten Auslenkung der Berührfläche (31) ein Klangsignal ausgeben wird.

4. Bedienvorrichtung (1) nach einem der vorangehenden Ansprüche, **dadurch gekennzeichnet, dass** die Steuerung so ausgebildet ist, sowohl mit der ersten haptischen Rückkopplung als auch mit der zweiten haptischen Rückkopplung jeweils ein Klangsignal ausgegeben wird.

5. Bedienvorrichtung (1) nach Anspruch 4, **dadurch gekennzeichnet, dass** die ausgegebenen Klangsignale für die erste haptische Rückkopplung und die zweite haptische Rückkopplung verschieden sind.

6. Verfahren zum Bedienen von Funktionen, welches die Schritte umfasst: Darstellen eines virtuellen Bedienelements auf einer Anzeigefläche (21), Erfassen von Berührpositionen auf einer mit der Anzeigefläche (21) gekoppelten Berührfläche (31) einer berührungsempfindlichen Positionserfassungsvorrichtung (30), Erfassen von Andruckkräften bei einer berührenden Betätigung der Berührfläche (31); Auswerten der erfassten Berührpositionen und Andruckkräfte und ermitteln, ob eine korrekte haptische Betätigung des virtuellen Bedienelements vorliegt, und falls dies der Fall ist, Auslösen einer dem mindestens einen virtuellen Bedienelement zugeordneten Funktion und Erzeugen einer haptischen Rückkopplung an der Berührfläche (31),
**dadurch gekennzeichnet, dass**
die ermittelten Andruckkräfte mit einem ersten Kraftschwellenwert (850) und einem zweiten Kraftschwellenwert (860) verglichen werden und beim Überschreiten des ersten Kraftschwellenwertes (850) eine erste haptische Rückkopplung an der Berührfläche (31) erzeugt wird und anschließend bei einem Unterschreiten des zweiten Kraftschwellenwertes (860) eine von der ersten haptischen Rückkopplung abweichende, zweite haptische Rückkopplung an der Berührfläche (31) erzeugt wird, wobei die erste haptische Rückkopplung die zweite haptische Rückkopplung als impulsartige Auslenkungen der Berührfläche (31) ausgeführt werden.

7. Verfahren nach Anspruch 6, **dadurch gekennzeichnet, dass** das haptische Rückkopplung nur erzeugt wird, wenn die erfasste Berührposition in einem Auslösebereich des mindestens einen virtuellen Bedienelements liegt, der dem mindestens einen virtuellen Bedienelement zugeordnet ist.

8. Verfahren nach Anspruch 6 oder 7, **dadurch gekennzeichnet, dass** zumindest mit der ersten haptischen Rückkopplung oder der zweiten haptischen Rückkopplung zeitlich synchronisiert ein akustisches Klangsignal ausgegeben wird.

9. Verfahren nach Anspruch 8, **dadurch gekennzeichnet, dass** das akustische Klangsignal räumlich benachbart zu der Berührfläche (31) ausgegeben wird.

10. Verfahren nach Anspruch 8 oder 9, **dadurch gekennzeichnet, dass** das zeitlich synchronisierte Ausgeben des Klangsignals so vorgenommen wird, dass eine maximale Auslenkung der Berührfläche (31) zeitlich mit dem Beginns des ausgegebenen akustischen Klangsignals zusammenfällt, so dass ein Benutzer der einen Finger als Betätigungselement verwendet, die haptische Rückkopplung zeitgleich mit dem Beginn des akustischen Klangsignals wahrnimmt.

11. Verfahren nach einem der Ansprüche 6 bis 10, **dadurch gekennzeichnet, dass** die zugeordnete Funktion eine Funktion in einem Kraftfahrzeug (3) ist.

12. Bedienvorrichtung (1) nach einem der Ansprüche 1 bis 5, **dadurch gekennzeichnet, dass** die Bedienvorrichtung (1) zur Verwendung in einem Kraftfahrzeug (3) ausgebildet ist.

13. Bedienvorrichtung (1) nach einem der Ansprüche 1 bis 5 oder 12, **dadurch gekennzeichnet, dass** die Bedienvorrichtung (1) Bestandteil eines Landfahrzeugs, eines Luftfahrzeugs, eines Wasserfahrzeugs, eines Verkaufs- oder Informationsautomaten, eines Telefons, eines Tabletcomputers, eines Personalcomputers, eines interaktiven Möbelstücks, eines Fernsehers, eines Haushaltsgeräts, einer Produktions- oder Prozessanlage, eines Leitstands, eines Haushaltsgeräts oder eines Geräts der Unterhaltungselektronik oder eines Spielautomaten ist.
